# EUROPEAN PATENT APPLICATION

(11) **EP 4 530 584 A2**
(43) Date of publication of application: **02.04.2025**
(21) Application number: 25158347.2
(22) Date of filing: 05.04.2019
(51) Int. Cl.: G01F 1/667

(54) **LOCATION AND FLOW RATE METER**

(30) Priority: 06.04.2018 US 201862654164 P
(62) Divisional of application: 23170438.8
(71) Applicant: Orbis Intelligent Systems, Inc., San Diego CA 92121 (US)
(72) Inventor: KRYWYJ, Daniel Milne, San Diego, 92121 (US); PRSHA,, Jeffrey A, San Diego, 92121 (US)
(74) Representative: Haseltine Lake Kempner LLP

(57) **Abstract**

Apparatuses and methods for detecting and determining flow within a water release assembly are provided. The water release assembly may include a fluid flow passage with an inlet and an outlet, a flow meter for detecting fluid flow through the fluid flow passage, an attachment structure for attaching the fluid flow passage to an external fluid flow conduit, and a fluid flow processing module configured to acquire and store location data that is related to a geographic location of the fluid flow processing module, store fluid flow data that is related to fluid flow through the fluid flow passage and is based, at least in part, on the fluid flow detected by the flow meter, and wirelessly transmit the location data and the fluid flow data to an external computer.

## Description

A PCT Request Form is filed concurrently with this specification as part of the present application. Each application that the present application claims benefit of or priority to as identified in the concurrently filed PCT Request Form is incorporated by reference herein in its entirety and for all purposes.

### BACKGROUND

Fluid may be flowed through various conduits of a fluid delivery system and flowed out of the fluid delivery system at multiple geographical locations using various fluid extraction assemblies.

For example, fresh water distribution systems in municipalities have a network of water mains and other pipes that carry water to various customers and other destinations. It is difficult to monitor and control disposition of water throughout the network, particularly in real time. This is particularly true when water release elements such as standpipes can be easily installed at various locations throughout the network.

### SUMMARY

The systems, methods and devices of this disclosure each have several innovative aspects, no single one of which is solely responsible for the desirable attributes disclosed herein. Included among these aspects are at least the following implementations, although further implementations may be set forth in the detailed description or may be evident from the discussion provided herein.

In some embodiments a water release assembly may be provided. The water release assembly may include a fluid flow passage with an inlet and an outlet, a flow meter for detecting fluid flow through the fluid flow passage, an attachment structure for attaching the fluid flow passage to an external fluid flow conduit, and a fluid flow processing module configured to acquire and store location data, the location data being related to a geographic location of the fluid flow processing module, store fluid flow data, the fluid flow data being related to fluid flow through the fluid flow passage and is based, at least in part, on the fluid flow detected by the flow meter, and wirelessly transmit the location data and the fluid flow data to an external computer.

In some embodiments, the flow meter may include a first flow sensor and a movement mechanism, the movement mechanism may be configured to be moved by fluid flow through the fluid flow passage, the first flow sensor may be configured to detect the movement of the movement mechanism and to generate first sensor data related to the movement of the movement mechanism, and the fluid flow data may be based, at least in part, on the first sensor data.

In some such embodiments, the fluid flow processing module may be further configured to store the first sensor data, and the fluid flow data may include the first sensor data.

In some such embodiments, the movement mechanism may include a magnet and may be further configured such that fluid flow through the fluid flow passage causes the magnet to move, and the first flow sensor may be further configured to detect the magnet and to generate first sensor data related to each detection of the magnet.

In some further such embodiments, the fluid flow data may be indicative of each detection of the magnet by the first flow sensor.

In some further such embodiments, the first sensor data may be the generation of a voltage in response to each detection of the magnet, the fluid flow processing module may be further configured to generate a count of each voltage generation by the first flow sensor, and the fluid flow data may include the count.

In some further such embodiments, the flow meter further may include a chamber in which at least a portion of the movement mechanism and magnet are positioned, and the movement mechanism may be configured such that fluid flow in the chamber causes the movement mechanism to move the magnet in a cyclic motion.

In some such embodiments, each detection of the magnet may be associated with one cycle of movement of the movement mechanism.

In some embodiments, the flow meter may include two acoustic sensors in contact with the fluid flow passage, the two acoustic sensors may be configured to generate sensor data affected by movement of fluid through the fluid flow passage, and the fluid flow data may include the sensor data.

In some such embodiments, the two acoustic sensors may be ultrasonic transducers.

In some such embodiments, the two acoustic sensors may be separated along the center axis of the fluid flow passage by a first distance of at least about 1.3 inches.

In some embodiments, the water release assembly may further include one or more acoustic sensors configured to receive acoustic signals from a pipe, and a housing. The one or more acoustic sensors and the fluid flow processing module may be positioned within the housing, and the fluid flow processing module may be further configured to analyze the acoustic signals received by the one or more acoustic sensors to determine a pipe condition of the pipe.

In some such embodiments, the water release assembly may further include an acoustic signal generator configured to generate an acoustic signal. The acoustic signal generator may be positioned within the housing, and the fluid flow processing module may be further configured to cause the acoustic signal generator to apply an acoustic signal to the fluid flow passage.

In some further such embodiments, the acoustic signal generator may be one of a microphone or a solenoid.

In some such embodiments, the pipe condition may be a crack in a pipe, bore loss, wall loss, or flow in the pipe.

In some such embodiments, the water release assembly may further include an accelerometer. The accelerometer may be positioned within the housing and may be configured to generate orientation data with respect to the ground, and the fluid flow processing module may be further configured to exit a sleep state based one or more of the orientation data and acoustic data, and to enter a sleep state based one or more of the orientation data and acoustic data.

In some further such embodiments, the fluid flow processing module may be further configured to exit a sleep state based one or more of: (i) the orientation data indicating a center axis of the water release assembly is oriented in a non-horizontal position relative to the ground, and (ii) acoustic data indicating one or more of: fluid is flowing within the fluid flow passage and a valve has been opened, and to enter a sleep state based one or more of: (i) the orientation data indicating the center axis of the water release assembly is in a substantially horizontal position relative to the ground, and (ii) acoustic data indicating one or more of: fluid is not flowing within the fluid flow passage and a valve has been closed.

In some embodiments, the water release assembly may further include a flow meter housing. The flow meter and the fluid flow processing module may be positioned within the flow meter housing, the flow meter may include one or more second sensors configured to generate second sensor data related to movement of fluid through the fluid flow passage, the fluid flow data may include the second sensor data, and the flow meter housing may be connected to the fluid flow passage.

In some embodiments, the fluid flow passage, the flow meter, and the attachment structure may be a standpipe.

In some embodiments, the fluid flow processing module may include a global positioning satellite (GPS) antenna and a wireless antenna, and the fluid flow processing module may be further configured to acquire the location data using the GPS antenna and to transmit the location data and the fluid flow data using the wireless antenna.

In some such embodiments, the wireless antenna may be a cellular antenna, a Code Division Multiple Access (CDMA) antenna, a Global System for Mobile Communications (GSM) antenna, a low power wide area network (LoRaWAN) antenna, an antenna capable of operating between 850 MHz and 1,900 MHz, an antenna capable of operating between 2.4 GHz and 5 GHz, a Bluetooth antenna, an omnidirectional antenna, or a directional antenna.

In some embodiments, a method may be provided. The method may include attempting to acquire location data of a water release assembly using a first communications unit, acquiring and storing fluid flow data related to fluid flow through a fluid flow passage of the water release assembly, creating a new record that includes fluid flow data, location data, time, date, or battery voltage of a fluid flow sensor unit, and attempting to wirelessly connect with a wireless network using a second communications unit.

In some embodiments, the first communications unit may include a GPS antenna and attempting to acquire location data may further include using the GPS antenna, and the second communications unit may include a wireless antenna and attempting to wirelessly connect with the wireless network may further include using the wireless antenna.

In some embodiments, acquiring and storing fluid flow data may further include detecting fluid flow through the fluid flow passage, and the method may further include powering on, after the detecting, the first communications unit and the second communications unit.

In some such embodiments, the detecting fluid flow through the fluid flow passage may further include detecting magnetic pulses of a movement mechanism of a flow meter.

In some further such embodiments, the method may further include resetting and then starting a first timer in response to detecting each magnetic pulse, and storing, after determining that the first timer has reached a first threshold time, the new record.

In some such embodiments, the detecting fluid flow through the fluid flow passage may further include detecting acoustic signals from the fluid flow passage.

In some embodiments, the method may further include determining a pipe condition of one or more pipes to which the water release is directly or indirectly connected.

In some embodiments, the method may further include acquiring and storing the location data of the fluid flow passage, after acquiring and storing the location data, powering off the first communications unit, acquiring a wireless connection with the wireless network, and after acquiring the wireless connection, wirelessly transmitting the location data and the new record to an external computer.

In some such embodiments, the method may further include powering off the second communications unit after wirelessly transmitting the new record to the external computer.

In some further such embodiments, the method may further include powering on the second communications unit and contemporaneously starting a third timer, and powering off the first communications unit after determining that the second timer has reached a second threshold time.

In some embodiments, the method may further include powering on the first communications unit and contemporaneously starting a second timer, powering off the first communications unit after acquiring the location data, and powering off the first communications unit after determining that the second timer has reached a second threshold time.

In some embodiments, the method may further include causing a fluid flow processing module of the water release assembly to exit a sleep state based on receiving orientation data from an accelerometer or acoustic data from acoustic sensors, and causing the fluid flow processing module to enter a sleep state based on receiving the orientation data or the acoustic data.

In some such embodiments, the causing the fluid flow processing module to exit the sleep state is further based on receiving (i) orientation data indicating a center axis of the water release assembly is oriented in a non-horizontal position relative to the ground, or (ii) acoustic data indicating fluid is flowing within the fluid flow passage or a valve has been opened, and the causing the fluid flow processing module to enter the sleep state is further based on receiving (i) orientation data indicating the center axis of the water release assembly is in a substantially horizontal position relative to the ground, or (ii) acoustic data indicating fluid is not flowing within the fluid flow passage or a valve has been closed.

In some embodiments, a method of detecting a pipe condition of a pipe directly or indirectly connected to a water release assembly using an acoustic sensor may be provided. The method may include receiving acoustic signals from the water release assembly using the acoustic sensor, optionally, measuring the acoustic signals received by the acoustic sensor, analyzing the acoustic signals received by the acoustic sensor to determine a pipe condition of a pipe, and reporting the pipe condition to an external device.

In some embodiments, the receiving may include receiving acoustic signals from the water release assembly using a plurality of acoustic sensors, the measuring may include measuring the acoustic signals received by the plurality of acoustic sensors, and the analyzing may include analyzing the acoustic signals received by the plurality of acoustic sensors to determine the pipe condition.

In some embodiments, the method may further include transmitting one or more acoustic signals to the water release assembly.

In some embodiments, the method may further include transmitting one or more acoustic signals to the pipe through the water release assembly.

In some embodiments, the method may further include detecting a pipe condition trigger, and transmitting one or more acoustic signals to the pipe in response to detecting the pipe condition trigger.

In some embodiments, the receiving acoustic signals from the water release assembly may be performed continuously over a first time period.

In some embodiments, the method may further include determining a change in the one or more of the acoustic signals as compared to a first threshold, and the analyzing may further include analyzing the change in the one or more acoustic signals as compared to the first threshold.

In some embodiments, an acoustic pipe condition sensor may be provided. The acoustic pipe condition sensor may include a first acoustic sensor configured to receive acoustic signals, a power source, and a controller with a communications unit. The controller may be electrically connected to the first acoustic sensor and the power source, and may be configured to receive acoustic signals from a water release assembly using the first acoustic sensor, analyze the acoustic signals received by the first acoustic sensor to determine a pipe condition of a pipe to which the water release assembly is directly or indirectly connected, and transmit, using the communications unit, data representative of the pipe condition to an external device.

In some embodiments, the first acoustic sensor may be a microphone.

In some embodiments, the acoustic pipe condition sensor may further include a plurality of acoustic sensors that includes the first acoustic sensor. The controller may be further configured to receive acoustic signals from the water release assembly and the pipe is directly or indirectly connected to the water release assembly using the plurality of acoustic sensors, measure the acoustic signals received by the plurality of acoustic sensors, and analyze the acoustic signals received by the plurality of acoustic sensors to determine the pipe condition of the pipe.

In some embodiments, the plurality of acoustic sensors may further include one or more microphones, and further include a speaker.

In some embodiments, the plurality of acoustic sensors may further include a solenoid configured to apply an input acoustic signal to the pipe.

In some embodiments, the pipe condition may be one or more of: an event, a leak in a pipe, crack in a pipe, bore loss, wall loss, flow in the pipe, direction of the event relative to the acoustic pipe condition sensor, direction of the leak relative to the acoustic pipe condition sensor, direction of the crack relative to the acoustic pipe condition sensor, direction of the bore loss relative to the acoustic pipe condition sensor, direction of the wall loss relative to the acoustic pipe condition sensor, and direction of the flow relative to the acoustic pipe condition sensor.

In some embodiments, the plurality of acoustic sensors may further include an accelerometer, and the controller may be further configured to detect a signal from the accelerometer, and measure, in response to the signal from the accelerometer, the acoustic signals in the pipe.

In some embodiments a system may be provided. The system may include a plurality of acoustic pipe condition sensors and each acoustic pipe condition sensor may include a first acoustic sensor configured to receive acoustic signals, a power source, and a controller with a communications unit. The controller may be electrically connected to the first acoustic sensor and the power source, and configured to receive acoustic signals from a pipe using the first acoustic sensor, analyze the acoustic signals received by the first acoustic sensor to determine a pipe condition of the pipe, and transmit, using the communications unit, data representative of the pipe condition to a second controller. The second controller may have a second communications unit and may be configured to receive the data from each of the first communications unit from the plurality of acoustic pipe condition sensors, cause a notification to be transmitted to an external device, and the notification may include information related to the pipe condition.

### BRIEF DESCRIPTION OF THE DRAWINGS

Figure 1 depicts an example water release assembly.
Figure 2 depicts another example water release assembly which is a standpipe.
Figures 3A and 3B depict a cross-sectional view of an example flow meter having a movement mechanism inside a chamber.
Figure 4 depicts a schematic of an example processing module.
Figure 5 depicts an example technique of operating a water release assembly.
Figure 6 depicts an example record.
Figure 7 depicts an example map showing multiple water release assemblies.
Figures 8A and 8B depict examples of two ultrasonic transducers.
Figures 9A and 9B depict cross-sectional views of two transducers and associated lenses positioned on a pipe.
Figure 10A depicts an off-angle view of the underside of an example housing with two transducers and Figure 10B depicts a cross-sectional view of the example housing of Figure 10 A.
Figure 11A depicts an off-angle view of the underside of a second example housing with two transducers and Figure 11B depicts a cross-sectional view of the second example housing of Figure 11A.
Figure 12 depicts an example housing with an adjustable positioning mechanism having two brackets.
Figure 13 depicts an exploded view of the housing of Figure 12.
Figure 14 depicts the housing of Figure 12 in a second configuration.
Figures 15A and 15B depict front views of the housing of Figure 12 positioned on different sized standpipes.
Figures 16A through 16D depict a second example housing.
Figure 17 depicts an axial cross-section of a pipe with numerous pipe conditions.
Figures 18A and 18B depict another example fluid flow processing module.
Figure 19 depicts a partially exploded view of an example positioning of the fluid flow processing module of Figure 18 to a portion of a standpipe.
Figure 20 schematically depicts a second example processing module.
Figures 21A and 21B present flow charts for treating acoustic measurements.
Figures 22A and 22B depict a top view of an example pipe network with a tap connected to a standpipe.
Figure 23 depicts another example technique of operating a water release assembly.
Figure 24 depicts depict a top view of the example pipe network of Figures 23A and 23B with two taps and two water release assemblies.

### DETAILED DESCRIPTION

In the following description, numerous specific details are set forth in order to provide a thorough understanding of the presented concepts. The presented concepts may be practiced without some or all of these specific details. In other instances, well known process operations have not been described in detail so as to not unnecessarily obscure the described concepts. While some concepts will be described in conjunction with the specific embodiments, it will be understood that these embodiments are not intended to be limiting.

### Introduction

Many water utility districts have numerous above-ground water access points or taps where water may be drawn from an overall water distribution system. These water access points may include fire hydrants, water spouts, spigots, and standpipes A single water utility district may have thousands of these access points distributed throughout geographic regions that could be tens or hundreds of miles in size. These access points are available and used for many types of uses, such as commercial, residential, and other municipal uses; these uses may include filling water tanks for commercial construction, filling up a fire truck tank, filling up a ferry tank, irrigating an agricultural area, and providing drinkable water to remote locations.

These discharge locations generally do not have a means for easily tracking from which access point water was drawn, who drew water from an access point, and how much water was drawn from an access point. Employees or contractors may go to field sites and read meter values at access points, but this is a slow and inconvenient technique and frequently misses significant amounts of water release. As a consequence, much water dispensed from access points in water distribution network is wasted or is consumed without payment. Such uncompensated water drawn from access points is deemed nonrevenue water (NRW). Commonly, up to 20% or more of the total water discharged by a water utility across its entire distribution system is NRW. Water release assemblies described herein may be used to determine the location and amount of water drawn from a specific access location in order to determine who drew the water and how much water was drawn, which may be used to generate revenue from the extracted water. These water release assemblies may also be used to quickly stop undesired water releases. In certain embodiments, these assemblies automatically monitor and report water flow by wireless communication.

As stated above, some water utilities often employ standpipes or similar structures that serve as the aboveground access points. A standpipe may be a free-standing pipe that can be connected to a water conduit of a water supply or system, such as a water main or water delivery pipe. The standpipe may have an inlet through which water enters the standpipe, an outlet from which the water exits the standpipe, and an attachment mechanism configured to connect the inlet to a tap of the water conduit or delivery pipe. This attachment mechanism may be a threaded fitting that may be screwed onto a threaded port of the water conduit. When installed, a standpipe remains in a fixed geographic location until uninstalled. In some cases, standpipes are designed to be easily transportable. For example, a service employee or team may transport a group of standpipes via truck to multiple water access points that each have a tap to which the standpipe may be connected and draw water from any such access point. Further, a service employee can remove a standpipe in one location and install it in a different location. Tracking the installed locations of all the various standpipes in a water distribution system can be challenging. Given this and the inconvenience of manually reading meters of standpipes, water utilities often do not know from which discharge locations water was taken and how much water was taken.

### Example Water Release Assemblies

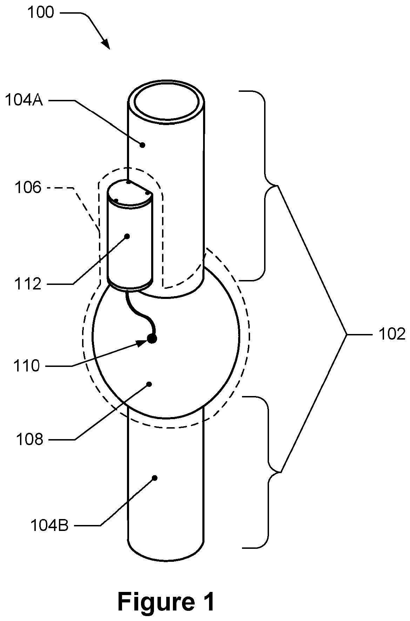

Some embodiments of the water release assembly described herein (e.g., a standpipe) include a fluid flow passage, a flow meter configured to detect fluid flow through the fluid flow passage and generate fluid flow data related to the fluid flow, and a processing module configured to acquire location data related to the geographic location of the water release assembly and to transmit the location data and the fluid flow data. Figure 1 depicts an example water release assembly 100 that includes a fluid flow passage 102 with two sections of pipe 104A and 104B, a flow meter 106 (encompassed by the dashed line) that has a chamber 108, a first flow sensor 110, and a fluid flow processing module 112. As can be seen, the chamber 108 is interposed between the two sections of pipe 104A and 104B such that fluid flowing through the fluid flow passage 102 flows through the chamber 108. While not shown in this figure, chamber 108 includes, in its interior, a flow responsive mechanism that generates signals responsive to the flow rate through chamber 108. These signals may be captured by the first flow sensor 110. Thus, the depicted embodiment has flow sensing components in three parts: the interior of chamber 108, the first flow sensor 110, and fluid flow processing module 112. The first flow sensor 110 is depicted positioned on the chamber 108 and may, in practice, be positioned outside, inside, or partially inside the chamber 108.

The flow meter 106 can take many forms, and need not have the separate components depicted in Figure 1. For example, all the components necessary for detecting flow or quantitating flow rate may be housed in fluid flow processing module 112. In another example, all the components are contained in fluid flow processing module 112 and first flow sensor 110. Further, while first flow sensor 110 and processing module 112 are shown connected by a wire, in alternative embodiments they are configured to communicate wirelessly. The flow sensor may also be any of the other sensors, or a combination of sensors, described herein below.

The fluid flow processing module 112 is depicted positioned outside the fluid flow passage 102 and the chamber 108, and may be connected to any of these elements, such as the first section of pipe 104A in Figure 1. This connection may be through the use of mechanical fastening features, such as screws, bolts, ties, clamps, or the like; it may also be through the use of a weld or an adhesive, such as an epoxy, silicone, cyanoacrylate, or UV cure adhesive. The fluid flow processing module 112 is shaped with rounded edges and a slim profile, for example, in order to minimize damage to it that could be caused by it catching or being physically impacted during use or transport, such as being thrown in the back or bed of a truck. As described below, in certain embodiments, the flow meter uses magnets on a movable component in order to detect flow, and the fluid flow processing module 112 uses antennas to wirelessly transmit and receive data. In certain embodiments, the housing of the fluid flow processing module 112 is constructed of a durable material (e.g., so that it may withstand impacts as well as thermal exposure, such as to temperatures of greater than 48 °C and 60 °C, for example, and less than 0 °C and -34 °C, for instance) that does not interfere with the antennas and magnets. As an example, the durable material may be a non-metallic material like a polymer, a plastic, a thermoplastic such as polyethylene (PE), polypropylene (PP), polystyrene (PS) and polyvinyl chloride (PVC).

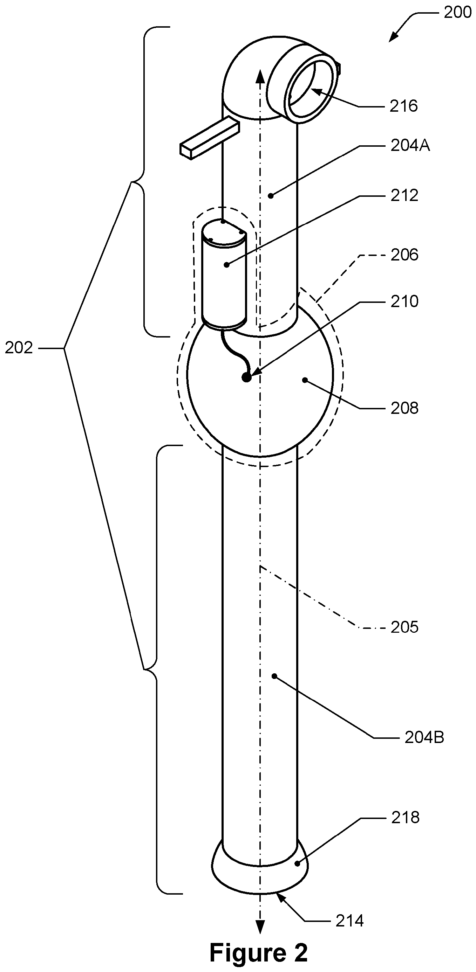

Figure 2 depicts a more detailed example water release assembly which is a standpipe. Like the water release assembly 100 of Figure 1, the standpipe 200 includes a fluid flow passage 202 having two sections of pipe 204A and 204B, similar to sections 104A and 104B in Figure 1, a flow meter 206 that has a chamber 208 and a sensor 210, and a fluid flow processing module 212. Unless otherwise characterized, these elements may be considered the same as their counterparts in Figure 1. The water release assembly 200 of Figure 2 also includes an inlet 214, an outlet 216, and an attachment structure 218 for attaching the standpipe to an external fluid flow conduit such as a municipal water main (not shown). As discussed above, this attachment structure 218 may be a threaded collar that is configured to be threaded onto a tap of a fluid conduit or pipe. As with Figure 1, the chamber 208 is interposed between the two sections of pipe 204A and 204B such that fluid flowing between these two sections of pipe must flow through the chamber 208.

In some embodiments, the flow meter 206 includes a movement mechanism positioned within the chamber 208 and configured to be contacted and moved by fluid flowing through the chamber. In certain embodiments, the movement mechanism within the chamber is a positive displacement component that responds to fluid flowing between rotating components housed within the chamber. In response to continuous flow, this movement mechanism may repeatedly move along a movement path, which may be cyclic or reciprocating along or around one or more rotational or linear axes, or a combination. This movement can be detected by a signal pick up such as the first flow sensor, which alone or in combination with the fluid flow processing module determines a quantity of flow through the chamber. For instance, a first point on the movement mechanism may, in response to flowing fluid, move past a second point on the chamber once per movement cycle and each time this occurs generate a pulse at the second point. Detecting each time the first point passes by the second point, i.e., detecting a pulse, effectively detects one complete movement cycle. Therefore, a total volume or mass of fluid flowing through this chamber may be determined by counting or totaling each cycle detection, and multiplying this total by the known volume of fluid that flows through the chamber each cycle. This detection may also be used for determining specific quantities of flow information, such as a flow rate.

In some embodiments, the movement mechanisms have magnets which, during flow, generate repeated variations in magnetic field pulses that are detected by sensors located outside the chamber. These pulses are used to determine fluid flow through the chamber. As used herein, a pulse includes any detectable variation in a magnetic field (or other field if magnets are not used). Many waveforms may be employed, including sinusoidal waveforms, square waveforms, triangle waveforms, saw-tooth waveforms, and the like. Various other types of mechanical movement mechanisms may be used to generate signals reflecting a quantity of flow through the water release assembly. Examples include mechanisms that rely on the rotation to drive either a magnetic coupling or a direct gear train connected to a mechanical counter. Further, the mechanism for detecting flowing fluid can produce any of a number of detectable signals, not just magnetic field signals. Examples include capacitive signals, optical signals, acoustic signals, inductive signals, etc.

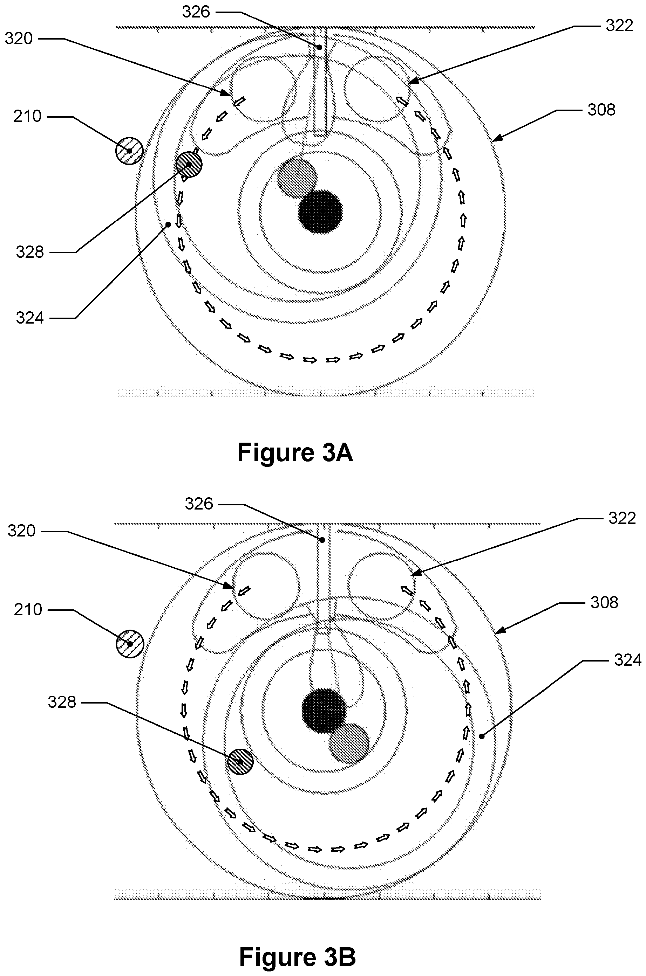

Figures 3A and 3B depict cross-sectional views of an example component of a flow meter, including a movement mechanism in the interior of a water release assembly. The depicted cross-section is through, for example, chamber 208 of Figure 2 and, during operation, fluid flows into (or from) the plane of the page. The depicted component of a flow meter, includes a chamber wall 308 with an inner inlet 320, an inner outlet 322, and a movement mechanism with a ring 324 positioned inside a wall with a slot 326. In this example flow meter, fluid enters the inside of the chamber 308 through the inner inlet 320, flows around the inside of the chamber wall 308 and contacts the ring 324, and then exits through the inner outlet 322, as indicated by the arrows. The arrangement of the ring 324 and the slot 326 within the chamber 308 is configured to enable and cause cyclic movement of the ring 324 when it is contacted by fluid flowing through the chamber wall 308. In this embodiment, the ring and slot engage so that, during flow, the ring reciprocates in a radial direction along the slot. As it does so, the ring also traverses an angular path, effectively swiveling back-and-forth as it reciprocates along the slot. For example, as can be seen in Figures 3A and 3B, fluid flowing in a general clockwise movement, as indicated by the arrows, while also flowing in a z-direction through the chamber 308 causes the ring to also move in a counterclockwise movement. As fluid continues to flow through the chamber wall 308, the ring 324 is caused to repeatedly move along the same movement path which may be considered the cyclic movement.

In the depicted embodiment, the flow meter 306 includes a magnet 328 that is attached to the ring 324 and an external sensor 210 configured to detect changes in magnetic field produced by the movement of magnet 328. The magnet 328 is seen in Figures 3A and 3B and may be considered positioned at a first point on the ring 324, as described above. The sensor 210 is positioned such that it can detect the variations in magnetic field produced by the movement of the magnet 328. The location of sensor 210 may be considered to be a second point on the chamber 208, as discussed above. The movement of the magnet 328 past the sensor 210 produces a magnetic pulse. The repeated, cyclic movement of the movement mechanism moves the magnet 328 past the sensor 210 each complete cycle, thereby enabling the sensor 210 to repeatedly detect the magnet 328 each time this occurs, thus detecting the magnetic pulse of the movement mechanism at this location. The sensor 210 may respond to each cycle by generating or altering a voltage which may be detected and stored by the processing module 212.

In certain embodiments, the sensor 210 is a Hall effect sensor or a reed switch. A reed switch generally includes two spring loaded metal contacts that are separated from each other within a sealed region. When a magnetic flux of suitable strength, such as produced by near proximity of a magnet within a flow meter component, is applied near the reed switch, the two contacts are caused to touch each other which completes a circuit to generate a voltage applied across the two contacts or otherwise produce a detectable response. Once the magnet is moved away, the two contacts separate and open the electrical circuit. A Hall effect sensor is a transducer that varies a voltage output in response to a magnetic field, such as a magnetic field from a magnet.

An example chamber and movement mechanism may be a positive displacement volumetric flow meter, such as the Honeywell Elster V100. The volumetric meter may have a chamber diameter between about 80 millimeters and 260 millimeters, a minimum flowrate between about 10 liters per hour and 100 liters per hour, a starting flowrate between about 2 liters per hour and 20 liters per hour, and an output pulse of about 0.5 to 5 liters per pulse.

In some embodiments, the fluid flow processing module is configured to preform one or more of the following functions: receiving and storing fluid flow data, acquiring and storing location data, and wirelessly transmitting data. The fluid flow data may be related to fluid flow through the fluid flow passage and may be based, at least in part, on the fluid flow detected by the flow meter which may be sensed data as detected by the sensor. For example, this fluid flow data may be the count of the magnetic pulses produced by the movement mechanism which may be transmitted as voltage or current pulses from the sensor. The location data, as described below, may include information directly or indirectly specifying the geographic location, e.g., altitude, latitude, and longitude, of the water release assembly.

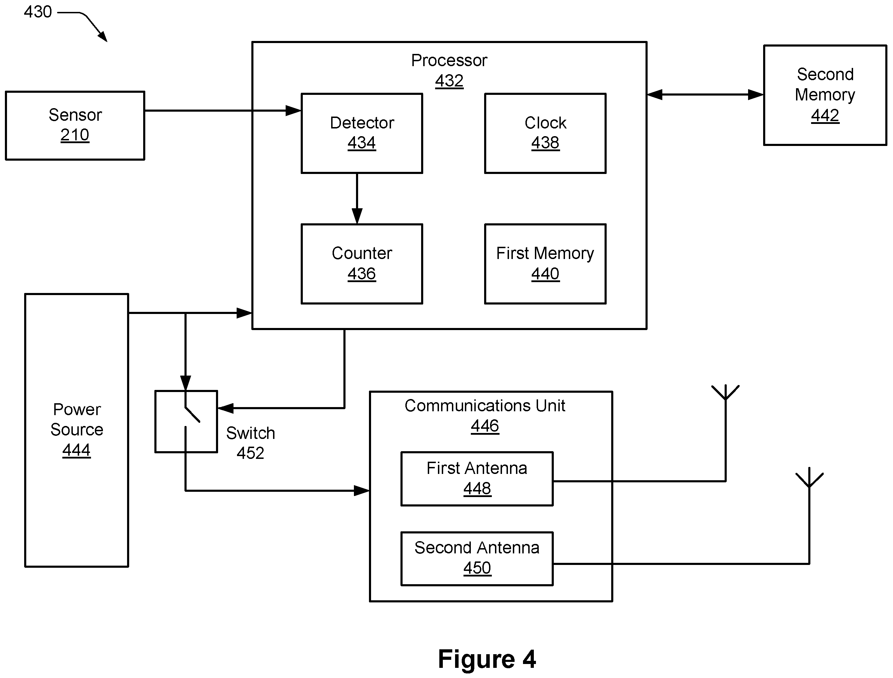

Figure 4 schematically depicts an example of a processing module 430. The depicted fluid flow processing module 430 includes a processor 432 that includes a signal detector 434, a counter 436, a clock 438, and a first memory 440. The first memory 440 may be a program memory that stores instructions to be executed by the processor 432 and buffers data for analysis and other processing. The detector 434 may be configured to detect a signal generated by the sensor 210. The sensor 210 may be part of the flow meter and external to fluid flow processing module. For example, as described above, the sensor 210 may be a reed switch that closes each time the magnet 328 passes by the sensor 210, which in turn generates a voltage signal that is passed to the detector 434. Although only one sensor is depicted, the processor may be configured to receive and store signals and data from more than one sensor. The counter 436 may be configured to count and store each signal or pulse from the sensor. The clock 438 may be a real time clock or a timer. The fluid flow processing module 430 also includes a second memory 442 that may be a rewritable memory that is configured to store data generated by the sensor 210 or other aspects of the fluid flow processing module 430, such as the counter 436 and the clock 438. A power source 444, such as a battery, is also a part of the fluid flow processing module 430 and is configured to provide power to the elements of the fluid flow processing module 430, such as the processor 432 and a communications unit 446.

The processor 432 may execute machine-readable system control instructions which may be cached locally on the first memory 440 and/or may be loaded into the first memory 440 from a second memory 442, and may include instructions for controlling any aspect of the fluid flow processing module 430. The instructions may be configured in any suitable way and may by implemented in software, firmware, hard-coded as logic in an ASIC (application specific integrated circuit), or, in other suitable implementation. In some embodiments, the instructions are implemented as a combination of software and hardware. While not shown in Figure 4, the fluid flow processing module 430 may additionally include one or more analog and/or digital input/output connection(s) and one or more analog-to-digital and/or digital-to-analog converters.

The communications unit 446 may include a first antenna 448 and a second antenna 450. The communications unit 446 may be configured to acquire location data about the location of the water release assembly using the first antenna 448 which is configured to connect with an external location device and receive location data from the external location device. The location data may include the latitude, longitude, and altitude, for example, of the fluid flow processing module 430 which houses the first antenna 448. For example, the first antenna 448 may be a global positioning satellite ("GPS") antenna that can establish a connection with multiple GPS satellites. Using data from communications with such satellites, the communications unit 446 can determine the location of the water release assembly and thereafter send location data to the processor 432.

The term "GPS" herein may mean the broader concept of a location system employing one or more satellites that transmit ephemeris (e.g., a table or data file that gives the calculated positions of a satellite at regular intervals throughout a period) and/or position fixing data to a GPS receiver or antenna on a device. The location of the device may be calculated from the position fixing data on the device itself-communications unit 446 in this case-on a secondary device. Multiple satellites may be used in the system with each one communicating ephemeris data and/or position fixing data. The same satellite may communicate both ephemeris data and position fixing data, or ephemeris data and position fixing data may be communicated through separate satellites. The satellites may be satellites in a GPS system, or it may be satellites in another satellite system such as the Russian Global Navigation Satellite System, the European Union Compass system, the Indian Regional Navigational Satellite System, or the Chinese Compass navigation system.

Some GPS systems use a very slow data transfer speed of 50 bits per second, which means that a GPS receiver, in some cases, has to be on for as long as 12 minutes before a GPS positional fix may be obtained. Once a positional fix is obtained, subsequent positional fixes may take much less time to obtain (assuming that the subsequent positional fix occurs within a sufficiently close interval), but this initial lock-on period requires that the GPS receiver be powered for the entire initial lock-on, which can be taxing on devices with small battery capacities.

The communications unit 446 may also be configured to wirelessly connect with, and transmit and receive data from, an external device, like a network or computer, using the second antenna 450 that is configured to connect with the external device. The communications unit 446 and second antenna 450 may be configured to communicate by an appropriate cellular protocol such as Code Division Multiple Access (CDMA)or Global System for Mobile Communications (GSM). Alternatively or in addition, the communication unit 446 and second antenna 450 may be configured to communicate by a non-cellular wireless protocol such as a low power wide area network (LoRaWAN) protocol, which operates between 850 MHz and 1,900 MHz, or other sufficiently long range protocol. As an example, the communications unit 446 may be the SIM808 from SIMCom Wireless Solutions, Shanghai, China. The product may be packaged on a printed circuit assembly ("PCA") with support integrated circuits from Adafruit, Industries of New York, New York.

As depicted in Figure 4, the processor 432 is connected to a switch 452 that is interposed between the power source 444 and the communications unit 446. The processor 432 may cause the switch 452 to close, which causes power to be delivered to the communications unit 446, or to open which stops the power to the communications unit 446. Although the first and second antennas 448 and 450 are depicted in a single communications unit 446, they may be, in some embodiments, separate units that are individually connected to the power source 444 such that they may be individually powerable. For instance, a first communications unit that includes the first antenna 448, such as a GPS unit with the GPS antenna, may be powered on while a second communications unit that includes the second antenna 450, such as a wireless communications unit that has a wireless antenna, is powered off.

In certain embodiments, the second memory 442 is configured to store data received from the processor 432 (e.g., count or flow rate data), the first antenna 448 and the second antenna 450, such as location data from the first antenna 448. Firmware updates, which may be received from the second antenna 450, are stored at an appropriate location (e.g., second memory 442) accessible to the processor 432. The processor 432 is also configured to access and transmit data stored in the second memory 442 over the second antenna 448. In some embodiments, the elements of the processor 432 may be communicatively connected with each other and the processor 432 is configured to control each such element, as well as any element of the fluid flow processing module 430.

### Example Processing Sequences

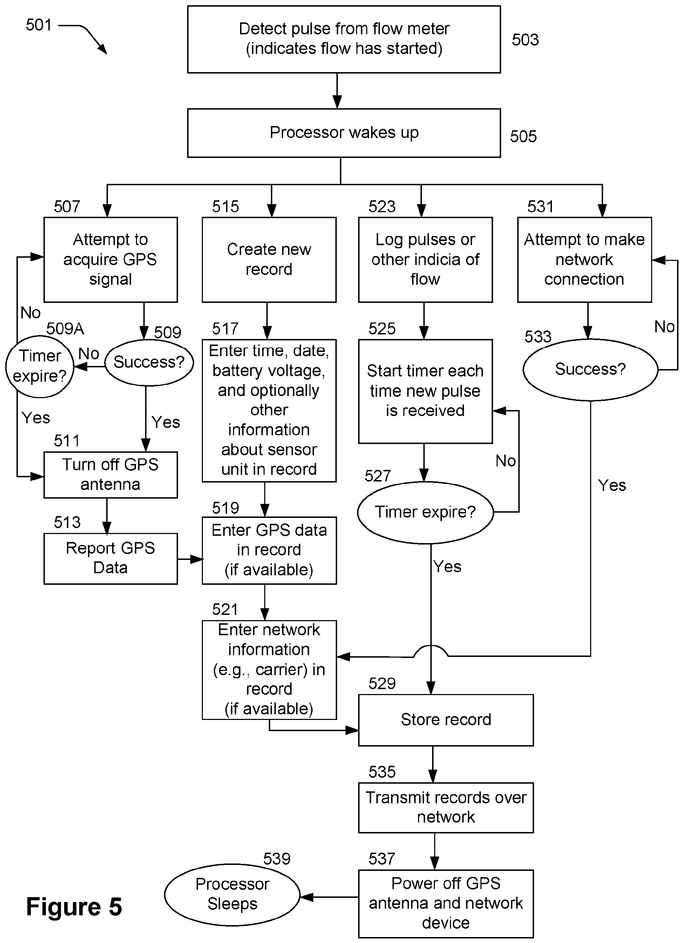

As stated above, the fluid flow processing module is configured to receive and store signals related to fluid flow that are generated by a sensor (and optionally convert those signals to values representing fluid flow rates or volumes, to receive and store location data, and to transmit the fluid flow data and location data). This configuration may include instructions stored on the first or second memories that are executable by the processor. Figure 5 depicts an example processing sequence for a processing module of a water release assembly. The blocks shown in Figure 5 may be implemented by the processor 432 and other components of processing module 430 of Figure 4 executing instructions stored on, for example, the first or second memories 440 and 442.

The example technique 501 of Figure 5 begins at block 503 in which a pulse from the flow meter is detected. This pulse may be a signal from or generated by the sensor 210 that, as described above, may be an electrical voltage from a reed switch sensor 210. Before receiving a pulse at block 503, the fluid flow processing module 430 may be in a sleep state in which power is on to the processor 432, but in a low power mode, with few, if any, operations being performed. At the same time, the communications 446 module is not powered on. In block 505, the processor 432 exits the low power state, and "wakes up", in response to detecting the signal from the sensor 210. The pulse or signal is typically interpreted to indicate that flow has started in the flow meter and fluid flow passage. The processor 432 may then simultaneously or sequentially cause various functions to be performed, as described below. The embodiment depicted in Figure 5, the processor, often in conjunction with other components of the processing module, executes four different operations, sometimes concurrently. As shown, the operations are acquiring GPS data, creating and populating a record, logging fluid flow information, and making a network connection. These operations are depicted as separate branches from operation 505.

For example, after waking up, the processor 432 may attempt to acquire location data or cause another component to make the attempt. For example, the processor may power on the communications unit 446 by, for example, causing the switch 452 to close. In response, the communications unit 446 begins attempting to receive a signal from one or more GPS satellites. Alternatively, in some other embodiments, the communications unit may attempt to acquire a signal via a different location providing method, such as by triangulation or other approach using a cellular transmission tower. After block 507, oval 509 indicates that a decision or assessment may be made as to whether the signal was successfully acquired. A successful signal acquisition may include both the establishment of a signal as well as the receipt of location data. In some embodiments, the receipt of the location data may be a separate operation. The GPS protocol, for example, has its own sequence of operations, including obtaining or using ephemeris data, obtaining position fixing data, and determining a geographical location. These operations may be performed within operations 507 and 509.

If the signal was not acquired, then the processing module may repeat operation 507 until a signal is successfully acquired. However, continuously repeating this attempt without success may drain the power source or otherwise interfere with the operation of the fluid flow processing module 430. In some embodiments, the processing module 430 may stop making attempts to acquire the signal after a defined number of attempts or a defined period of time has elapsed. For example, simultaneously with or soon after (e.g., within 5 seconds) the attempt of 507 is made, a first timer may be started using the clock 438. If the first timer reaches a first threshold time, such as about 3 minutes or about 5 minutes, (which may be considered the expiration of the first timer), then the attempt to acquire the signal may be stopped by, for instance, powering off the communications unit 446. The first timer may count up from zero to the threshold time, may count down from the threshold time to zero, or may count up from a specific time according to the clock 438. This decision regarding the first timer is represented by block 509A; if the timer has not expired, then block 507 may be repeated, but if it has reached the first threshold time and expired, then block 511 may be executed. In some embodiments, the turning off of block 511 may include powering off the communications unit 446 that includes both the first and second antennas. In some other embodiments in which the GPS antenna is a part of the GPS unit that is separated powered from the network communications unit, this attempt to acquire the signal may be stopped by powering off the GPS unit.

If the GPS signal was acquired in operation 507 and with it sufficient location data to determine the location of the water release assembly, then the GPS antenna may be powered off as indicated in block 511. As described above, this may include powering off the first communications unit that is the GPS unit, or the communications unit that includes both the first and second antennas. In some other embodiments, like the one depicted in Figure 4, if the GPS antenna (the first antenna 448) and a cellular antenna (the second antenna 450) are both part of the same communications unit 446, then the communications unit 446 may remain powered on (thereby skipping block 511) until a record has been stored and/or transmitted. In block 513, the GPS location data, such as the latitude, altitude, and longitude, may be reported to a record in the memory 442. In some embodiments in which a GPS signal was not acquired, GPS data may still be reported which could include zero values or other information indicating that a GPS signal, and therefore location data, were not acquired.

Returning to the point where the processor wakes up (block 505), a record may be created as indicated by block 515. In some embodiments, the contents of the record are stored in the second memory 442. The record may include, at least, some of the location data and the fluid flow data. After creating the record, the processor enters various pieces of information, such the time, date, and power level (e.g., battery voltage) of the power source 444 and other information, into the record. See block 517. Next, as illustrated in block 519, the location data, if available, may be entered into the record. As illustrated such data may be provided via operation 513 in the GPS branch of the process. As stated above, even if location data is not available, some information may be entered such as null or zero values. Next, as illustrated in block 521, the processor enters information about the network to which the communications device is connected, such as the wireless carrier, if available. As explained below such information may come from the communications unit or at least its logic associated with wireless communications.

Returning to the point where the processor wakes up (block 505), the processing module may capture information associated with fluid flow in a branch of the overall process. As illustrated in block 523, the module logs pulses or other indicia of fluid flow, depending on the type of sensor used. In certain embodiments, the processing module stores or logs such information in the second memory 442. As discussed above, fluid flow data may be provided as voltage pulses from the sensor, a count or counts from the counter 436, or other indicia of fluid flow. Other examples of the types of information that may be provided to indicate a quantity of fluid transferred include optical signals, acoustic signals, electrical signals (e.g., capacitive and/or inductive), and the like. In addition to fluid flow rate or quantity of fluid passed, the processing module may detect other quantities related to the fluid or the conduit; examples include temperature, pressure, etc. For compressible fluids such as gases, pressure, temperature, and volume may all need to be detected/monitored to determine the mass of the fluid that is flowing (or has flowed). Examples of other indicia of fluid flow, particularly acoustic signals, are described in more detail below.

The fluid flow data may be organized into discrete flows through the water release assembly, with each use being considered an "event." For example, the water may flow for twenty minutes and the stop for five hours, followed by a second flow for three minutes. The twenty minute flow and the three minute flow may be treated as two separate events. In some embodiments, an event begins with receipt the first pulse, which wakes up the processor at operation 505, and ends with a timer timing out after defined period from detection of the last pulse. In one implementation, simultaneously with or soon after (e.g., within 5 seconds) an indicator of fluid flow is received by the fluid flow processing module 430, such as a pulse from the sensor 210, a second timer is started using the clock 438. This is indicated by block 525. Each time the fluid flow processing module 430 receives such an indicator, the timer is reset. If the second timer reaches a second threshold time, such at about 5 minutes or about 10 minutes, and therefore expires without receiving during that period an indicator of flow, the processing module may conclude that the event has ended. This second timer may perform like the first timer described above, e.g., counting up from zero. Once the event has ended, the information entered into the record, and the record itself, may be stored in a memory, such as the memory 442, as indicated by block 529.

In another embodiment, before or after a pulse is detected at operation 503, a check may be made as to whether a detected pulse is a part of an ongoing event. This may include determining whether the second timer, which was started after a previous pulse was detected, has reached the second threshold time. If not, then the detected pulse may be associated with the ongoing event; i.e., the pulse is included in data indicating an accumulated amount of fluid flow during the event.

Returning to the point where the processor wakes up (block 505), the fluid flow processing module may attempt to make a network connection. See block 531. This may include causing the communications unit 446 to attempt to wirelessly connect with a wireless network using the second antenna 450, described above. Similar to operation 509, an operation 533 determines whether the connection was successfully made.

If the connection was not made, then the processing module may repeat operation 531 until the connection is successful. However, as described in the context of acquiring GPS data, continuously repeating this attempt without success may drain the power source and therefore, in some such embodiments, the processing module 430 may stop making such attempts. This cessation of attempts may occur after a number of attempts have been made or a period of time has elapsed as determined by a third timer, similar to those described above with reference to blocks 507, 509 and 509A. In some embodiments, for instance, if the third timer reaches a third threshold time without making a connection, then the attempt is stopped. In the embodiments in which the fluid flow processing module includes separately powered GPS unit and wireless communications units, this stopping may be made by powering off the wireless communications unit without powering off the GPS unit. In some other embodiments, this may include powering off the entire communications unit 446 of Figure 4. Additionally, even if the network connection was not made, then the record may still be stored on the memory and sent at a later time once the network connection is made, such as during another event. This may result in multiple records being sent at one time.

If the connection is made, then the network information may be entered into the record as indicated by block 521. Additionally, after the record is stored in block 529, the record may be wirelessly transmitted over the network to, e.g., an external device, such as a computer, server, cell phone, or mobile device, for instance. See block 535. In certain embodiments, the processing module sends not only the most recent record (the one for the just concluded event) but other records for other recent events (e.g., the ten or twenty most recent events). After this transmission, as illustrated by block 537, the communications unit 446 may be powered off. Further, as illustrated in block 539, the fluid flow processing module 430 may be placed into a sleep state or low power mode as described above.

In some embodiments, the fluid flow processing module may be configured to periodically send records of multiple events (e.g., the last ten or the last twenty or all of the records stored on the second memory 442) even if there is no location data stored in the records. This may occur, for example, one time per day so to enable the data to be periodically transferred off the fluid flow processing module and to the external device.

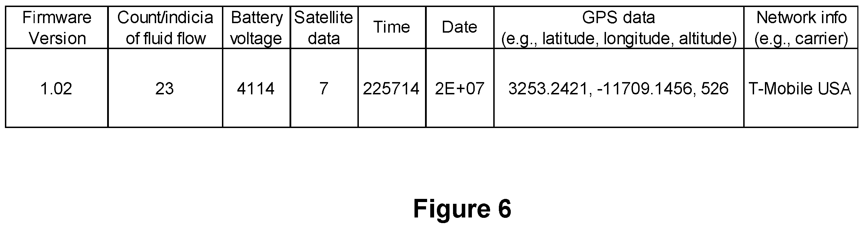

Figure 6 depicts an example record generated by a processing unit. In the depicted example, the record includes the version of firmware on the processor, fluid flow data such as a count or other information related to the fluid flow, the battery voltage, the number of GPS satellites to which the communications unit is connected, the time, the date, the location data that includes the latitude, longitude, and altitude, and network information which may include the cellular network to which the communications unit is connected, such as T-Mobile. Any combination of these items may be included in the record. In various embodiments, the record includes, at least, the location and captured fluid flow information over an appropriate time period for a particular water release assembly.

In some embodiments, the first antenna 448 and the second antenna 450 are oriented within the fluid flow processing module 430 to minimize any interference between the antennas and to maximize their abilities when positioned on the water release assembly. For example, many water release assemblies will be installed in a vertical position, similar to the position of the water release assembly 200 of Figure 2. The first and second antennas 448 and 450 may therefore be positioned such that when the fluid flow processing module 412 is in this in-use vertical position, the first and second antennas 448 and 450 are each in their optimal orientations. For instance, an optimal orientation of a GPS antenna may be one that receives vertically directed signals such that its longitudinal axis is parallel to the center axis of the fluid flow passage 202; an optimal orientation of a wireless antenna, like a GSM antenna, may be one that transmits and receives horizontally directed signals, such that its longitudinal axis is perpendicular to the center axis of the fluid flow passage 202. These antennas may also be positioned on opposite ends of the fluid flow processing module 212 in order to minimize their interference with each other.

The data sent over the external network may be ultimately transmitted to a computer or server and stored on a memory device of that computer or server. This data includes any data described above, such as the fluid flow data and location data. Such data can be stored in the format of a record as described above or any other suitable format. In some cases, the data indicates to a user, a municipality, or a company that fluid was flowed out of a specific water access point. This data may also be used to determine how much water was drawn from that water access point and who drew the water. The computer or server may be configured to send an alert to one or more other external devices, such as other servers, mobile devices, and the like, that fluid is being drawn from a specific water access point. This alert may be in the form of an email, pop-up screen, text message, light, and audio signal, for instance.

Location determination coupled with fluid transport (volume, mass, rate, etc.) is useful not only for identifying where fluid is consumed but also for providing performance indicators based on the functionality and behavior of the pipes, valves, and other infrastructure, as well as services used by the infrastructure.

In some embodiments, this data may be used to provide real-time use of one or more water release assemblies. This may be in the form of a chart or a map that is correlated with the geographic location of each in-use water release assembly. The map may include other information, such as historical use data of the geographic locations of all water release assemblies that were used to draw fluid from a fluid delivery system in a particular region over a certain amount of time. For example, the map may be of sub-region of a water utility district that includes geographic icons which indicate each use of a water release assembly within the past 24 hours. The geographic icons may provide any of the data included in the record as well as other flow related information, such as the total amount of water drawn or the number of events at the location.

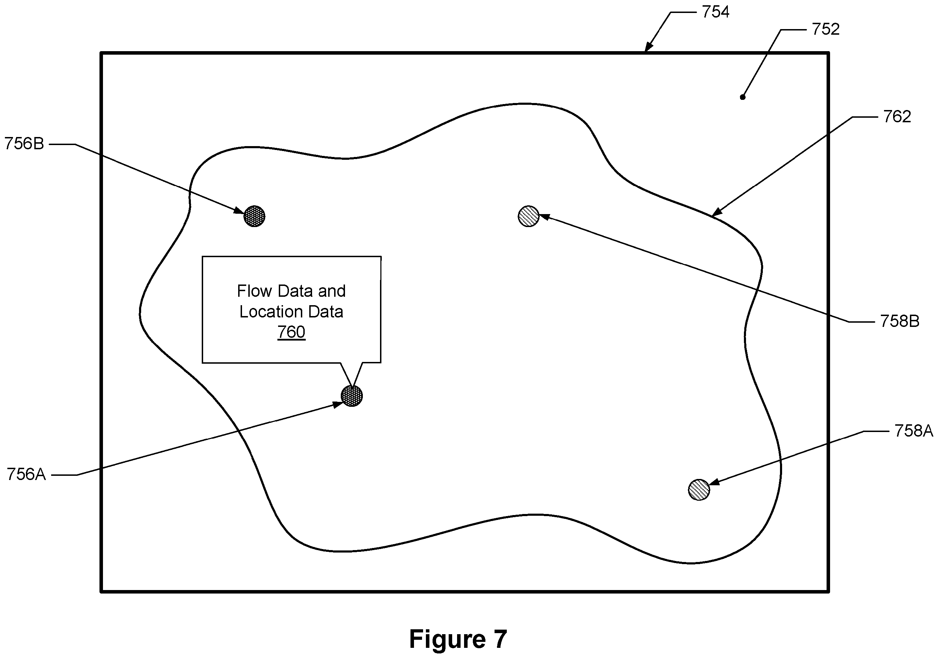

Figure 7 depicts an example map showing multiple water release assemblies. The map 752 is depicted on a screen 754 of a device, such as a computer, and includes a region 762 that represents a geographical region, such as the boundary or a city or utility district. The map 752 includes first geographic icons 756A and 756B that each may represent the real-time use of a single water release assembly, such as a standpipe. The first geographic icons 756A and 756B may provide information about the real-time use, such as the flow rate and total volume drawn during an event, as indicated by the pop-up bubble 760 over the first geographic icon 756A that may be generated when the first geographic icon 756A is selected. Second geographic icons 758A and 758B may indicate past historical use at a particular location and similar pop-up bubbles may be generated to provide the past use at each of those icons. In some embodiments, the real-time and historical uses of a water release assembly or geographic location may be displayed in a chart adjacent to the map 752 on the screen 754.

While the embodiments described herein have focused on water dispensing pipes and water distribution networks, this disclosure extends to other systems and contexts. For example, the fluid measured is not necessarily water or even a liquid. It may be any gas or liquid for which a dispensed or transmitted quantity may need to be measured and reported over a network. Examples of liquids include petroleum (e.g., in a pipeline), chemical feedstocks in chemical plants, and the like. Examples of gases include natural gas (e.g., in pipelines, whether within residences or in gas delivery network administered by a utility), gaseous chemical feedstocks, steam, pressurized air, etc. Further the quantity of fluid transported and the associated location can be detected and transmitted for any fluid conduit, not just pipes. Aqueducts, canals, troughs, and the like may benefit from the embodiments disclosed herein. And the conduits may be used in various contexts including utilities, municipalities, manufacturing plants, large buildings, compounds, complexes, and residences.

### Additional Examples of Flow Detection

As stated herein, the flow meter may take many forms. In some embodiments, the components used for detecting flow and/or quantitating flow may include a pair of discrete and separated acoustic sensors, such as ultrasonic transducers. This pair of acoustic sensors may, in some embodiments, be positioned within a housing of a fluid flow processing module, and in some other embodiments, they may be external to the housing of a fluid flow processing module. This pair of discrete and separated ultrasonic transducers may be employed to determine a flow rate or other flow condition in a pipe to which the pair of transducers are attached, including a standpipe. Certain embodiments employ such transducers and associated data analysis to supplement, or to use as an alternative to, a thermal flow condition assessment methodology as described herein.

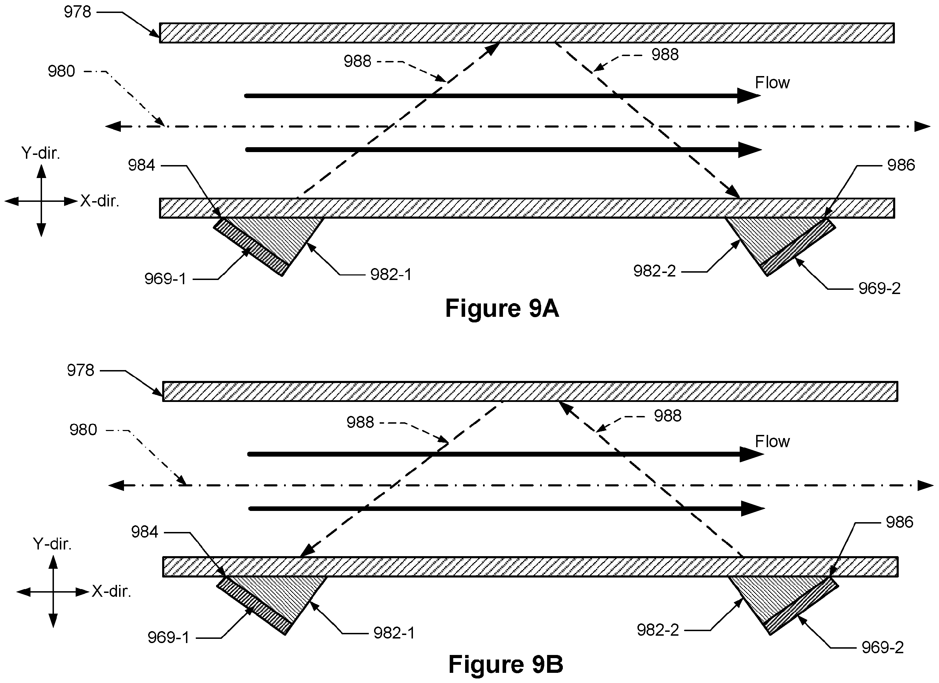

In a typical case, an ultrasonic flow condition system, applies an ultrasonic signal at each of two locations where flow condition is to be measured. A first ultrasonic transducer is attached at a first location and a second ultrasonic transducer is attached at a second location that is offset in the axial direction of the pipe (e.g., along the center axis of the pipe), and during data collection, the two transducers measure time of flight of ultrasonic signal propagation in each direction (upstream to downstream, and downstream to upstream). An example is shown in Figures 9A and 9B which are discussed below.

The flow condition assessment logic then determines a time of flight difference between the upstream and downstream directions. Depending on the fluid flow rate, the separation distance between the sensors, etc., the time of flight difference may be quite small, e.g., on the order of microseconds or less. Regardless of magnitude, the flow condition assessment processing logic may use the time of flight difference to determine fluid flow rate in pipe.

An ultrasonic transducer used for time of flight measurements may be disposed in a casing or other enclosure of a sensor unit or housing as described below. As examples, the two ultrasonic transducers may be provided in a single sensor unit that houses the pair or they may be provided as discrete sensors, with or without their own housings or casings. While the design and operation of ultrasonic transducers is well known, a few features of a typical ultrasonic transducer will now be provided.

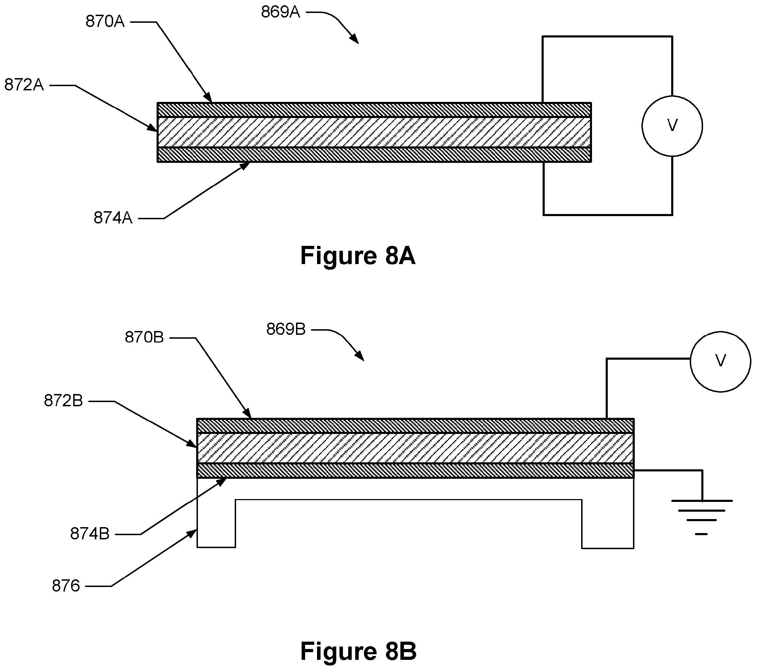

Figures 8A and 8B depict examples of two ultrasonic transducers. Figure 8A depicts an example of a one suitable design for a transducer 869A which includes a piezoelectric element 872A straddled by two electrodes, first electrode 870A and second electrode 874A. In certain embodiments, the piezoelectric element 872A of the device is powder pressed in the desired shape and sintered. Electrodes may be screened or painted on. "PZT" refers to lead zirconate titanate which is a frequently used ultrasonic transducer material. Applying an electric field as shown mechanically distorts the material and reflexively, distorting the material generates an electric charge between the electrodes. Figure 8B depicts an alternative ultrasonic transducer 869B that includes the elements as Figure 8A, but further includes a supportive membrane 876 that is attached to the second electrode 874A. In some embodiments, the ultrasonic transducer employs an alternative design, such as one employing a capacitive transducer. An example of a suitable ultrasonic transducer is the JIAKANG, Water Flow Meter External Piezo 1 Mhz Ultrasonic Transducer.

Various embodiments employ two ultrasonic transducers, each operating a particular ultrasonic frequency (e.g., 1Mhz) to measure the time of flight differential through a pipe (including a standpipe) and the flowing fluid. The time of flight difference varies depending upon the flow velocity. The difference in time of flights from one transducer to the other (both directions) increases with fluid increasing flow rate.

Figures 9A and 9B depict cross-sectional views of two transducers and associated lenses positioned on a pipe. The outer walls of the pipe 978 (which may be a standpipe) are seen and the pipe has a center axis 980. A first transducer 969-1 and its associated lens 982-1 is positioned at a first location 984 and a second transducer 969-2 and its associate lens 982-2 is positioned at a second location 986; these transducers are offset from each other by a first distance along the center axis 980 of the pipe, e.g., in the axial direction. In some embodiments, this first distance may be at least about 1.3 inches, 1.6 inches, 1.9 inches, 2.2 inches, 2.5 inches, 3.25 inches, 4 inches, 5.25 inches, 6.5 inches, and 7.25 inches (+/- 0.25 inches). The transducers 969-1 and 969-2 may be adhered (using acrylic or other suitable bonding agent) to couple the ultrasonic wave into the pipe wall at an off axis angle (e.g., approximately 35 degrees in this example). Because of the impedance change between the acrylic (or other bonding agent) and the metal pipe wall, the ultrasound bends inward to about 45 degrees in this example. The ultrasound waves, dashed lines 988, propagate across the pipe (through the water) reflects off the other side and excites the complimentary transducer. In Figure 9A, for instance, transducer 969-1 generates the ultrasound waves which propagate left to right in the Figure towards transducer 969-2 which receives these waves. The transducers then switch such that the transmitter becomes the receiver and the receiver the transmitter, so that the process can repeat in the opposite direction. For example, in Figure 9B, for example, transducer 969-2 generates the ultrasound waves which propagate right to left in the Figure towards transducer 969-1 which receives these waves. Depending on the transceiver capabilities of the two transducers, the upstream and downstream measurements may be performed concurrently or sequentially.

Note that only the "X" direction component (parallel to the pipe axis 980) of time of flight is affected by the fluid flow. The "Y" direction component (along the transverse axis perpendicular to the pipe axis 980) of time of flight is not substantially affected by the flow. So in the illustrated case, at 45 degrees, only the "X" component (or about .7 of the total length) is affected by the flow velocity.

Additional configurations and descriptions of ultrasonic transducers are provided in U.S. Provisional Patent Application No. 62/823,539, filed March 25, 2019, and are hereby incorporated by reference in its entirety.

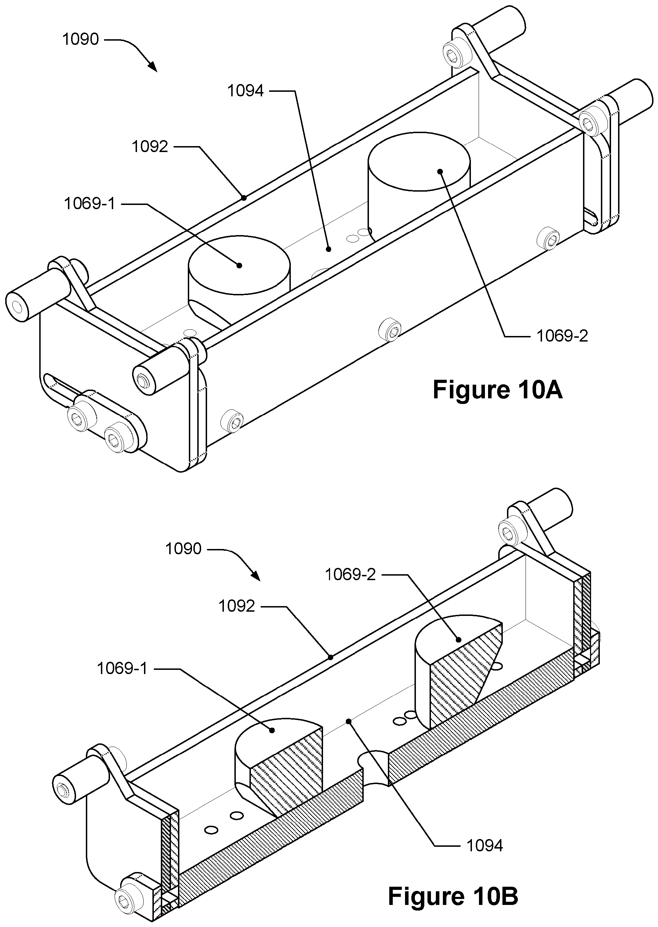

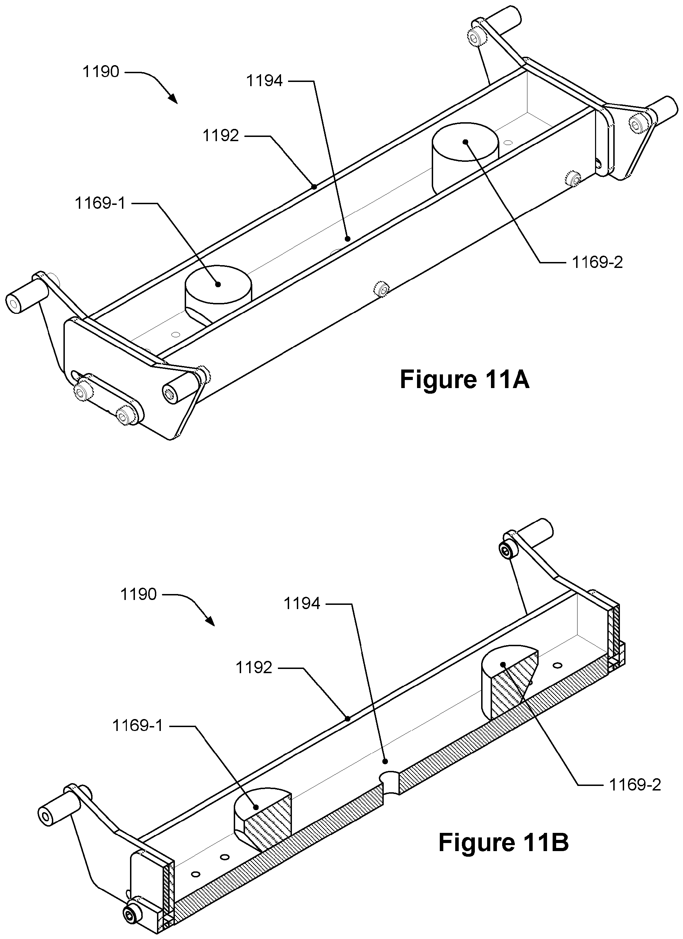

As stated above, these acoustic sensors may be positioned directly to the pipe, or standpipe, and may also be a part of a housing. Figure 10A depicts an off-angle view of the underside of an example housing with two transducers and Figure 10B depicts a cross-sectional view of the example housing of Figure 10A. As can be seen, this example housing 1090 has a body 1092 with a cavity 1094 in which two transducers 1069-1 and 1069-2 are positioned. Similarly, a second example in depicted in Figures 11A and 11B. Here, Figure 11A depicts an off-angle view of the underside of a second example housing with two transducers and Figure 11B depicts a cross-sectional view of the second example housing of Figure 11A. This second example housing 1190 also has a body 1192 with a cavity 1194 in which two transducers 1169-1 and 1169-2 are positioned. In some embodiments, these transducers may be attached to the body 1092 or 1192 and in some embodiments, these transducers may be positioned and attached to the standpipe after which the housing is positioned around the transducers.

### Additional Examples of Housings

The housings and flow detection modules (which may be referred to herein as a "detection device") may be positioned onto fluid conduits, e.g., standpipes, so that the sensors are near, indirectly, or directly in contact with the standpipe. In some embodiments, this positioning of some of the sensors enables these sensors to detect various conditions, which in turn allows the housing and flow detection module to perform the fluid flow and pipe conditions detections and determinations described herein.

Examples of a direct connection include some acoustic sensors that may be adhered directly to a fluid conduit, such as the standpipe; the housing may be positioned around such sensors. An example of an indirect connection is an accelerometer (or other sensor) that may be positioned within the housing such that once the housing is positioned directly on the standpipe the accelerometer (or other sensor) is near the standpipe and is indirectly connected to the standpipe through the direct connection of the housing with the standpipe.

Some of the housings and flow detection modules may therefore have positioning features that are configured to allow the housings and flow detection modules to be positioned on and connected to the standpipe. In some embodiments, the housings and flow detection modules may have an adjustable positioning mechanism that is configured to be positioned on and connected to a standpipe. The adjustability of this mechanism enables it to be moved and repositioned so that it can be placed on and connected to standpipes of different sizes and/or cross-sectional shapes (e.g., circular, rectangular, obround, oval, elliptical, etc.). The adjustable positioning mechanism may have one or more contact portions that are configured to contact the standpipe, and one or more body portions that connect at least one of the contact portions with the housings and flow detection modules. The one or more body portions, and thus the one or more contact portions, are configured to be movable with respect to the housings and flow detection modules. In some instances, the housings and flow detection modules may not contact the standpipe while one of the contact portions directly contacts the standpipe. Once the contact portion is secured to the standpipe, the body portion and the housing, are therefore also secured to the standpipe.

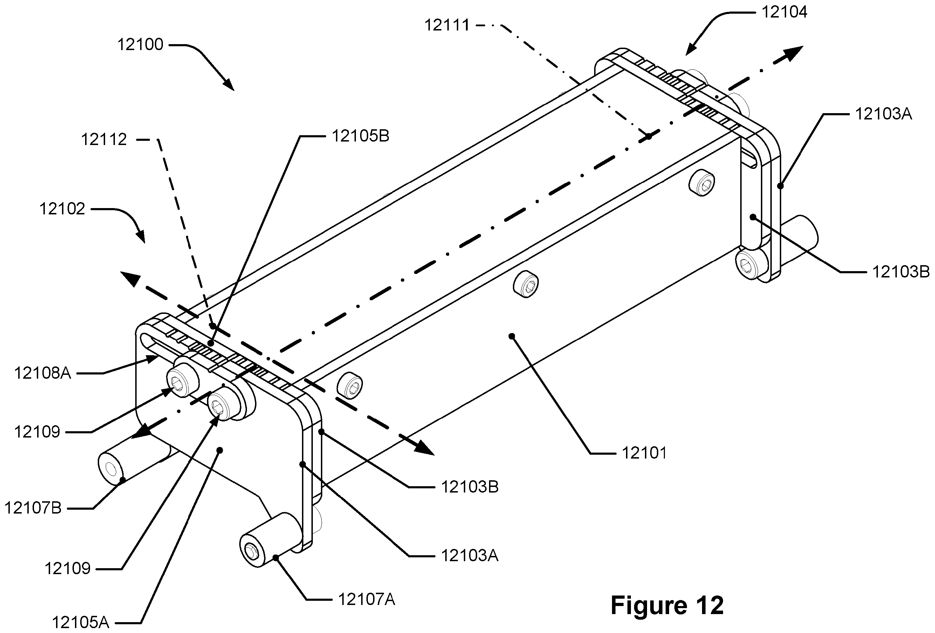

In some embodiments, the adjustable positioning mechanism may have two or more adjustable brackets, with each bracket including one contact portion and one body portion that is adjustably connected to the housing (or flow detection module). Figure 12 depicts an example housing with an adjustable positioning mechanism having two brackets. This housing 12100 has a body 12101 and two brackets at each end (first 12102 and second 12104) of the body 12101; these brackets are part of the adjustable positioning mechanism. At the first end 12102, each bracket 1203A and 1203B has a bracket body portion 12105A and 12105B, respectively and a contact portion 12107A and 12107B, respectively. The contact portions 12107A and 12107B are cylinders that can be positioned onto a fluid conduit, such as a standpipe. Each bracket body portion 12105A and 12105B also includes a slot 12108A and 12108B through which a screw 12109 (or bolt, pin, etc.) passes; the screws 12109 connect with the body 12101 and can secure the bracket body portions 12105A and 12105B directly or indirectly to the body 12101. Bracket body portion 12105B is connected directly to the body 12101 while bracket body portion 12105A is directly connected to bracket body portion 12105B and therefore indirectly connected to the body 12101; these two bracket body portions are connected by the screws 12109 to the body 12101.

The slots 12108A and 12108B allow the bracket body portions 12105A and 12105B to move with respect to the housing 12101. As illustrated in Figure 12 with the double-sided dashed arrow 12112, the bracket body portions 12105A and 12105B are moveable in a direction perpendicular to a longitudinal axis 12111 of the body 12101. In some embodiments, the body 12101, and thus the housing, may be positioned such that the longitudinal axis 12111 is parallel to a center axis of the standpipe, like the standpipe.

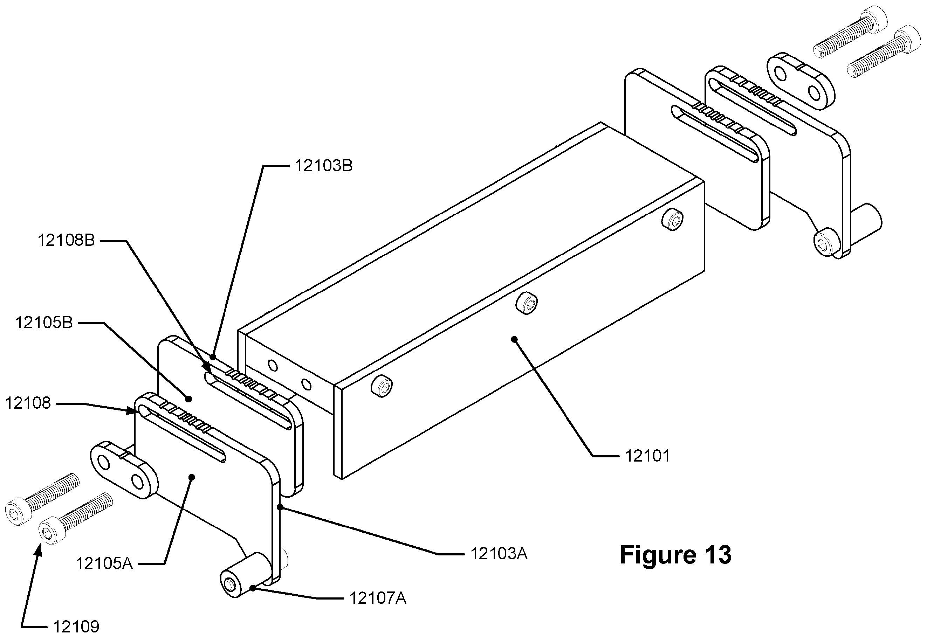

Figure 13 depicts an exploded view of the housing of Figure 12. The slots 12108A and 12108B can be more clearly seen here, along with the screws 12109.

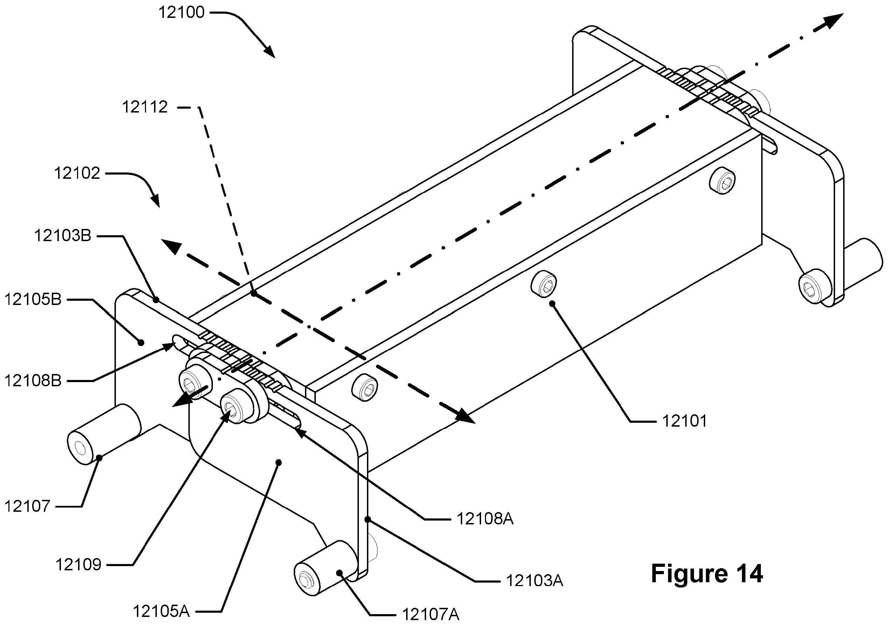

Figure 14 depicts the housing of Figure 12 in a second configuration; here, the bracket body portions of the adjustable positioning mechanism are moved in the direction perpendicular to the longitudinal axis 12111 and of the center axis of the standpipe. As stated above, this adjustability and movability of the positioning mechanism allows the housing to be positioned on standpipes or standpipes of different sizes and shapes.

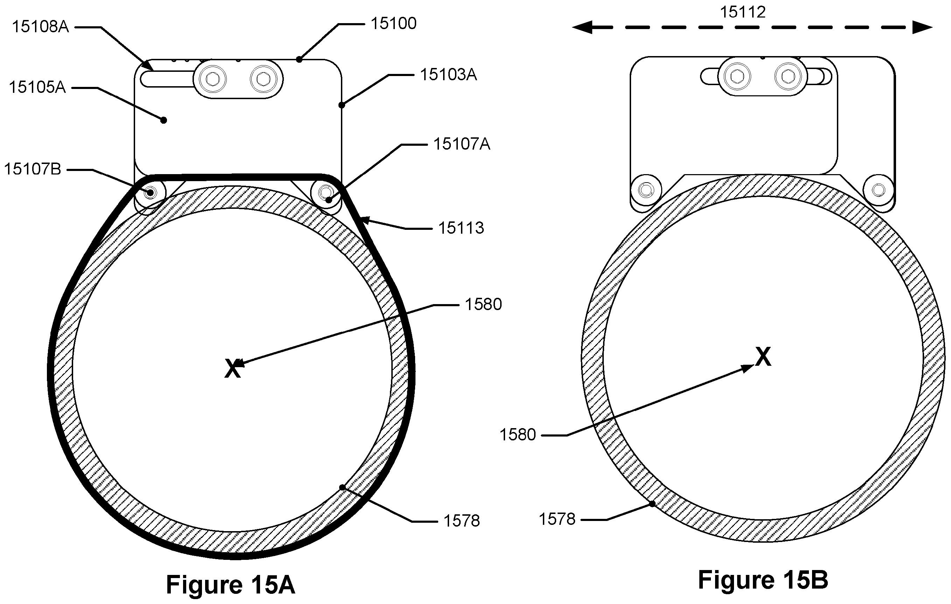

The adjustability of the adjustable positioning mechanism is illustrated in Figures 15A and 15B which depict front views of the housing of Figure 12 positioned on different sized standpipes. As can be seen in Figure 15A, the adjustable positioning mechanism is in a position to allow just the contact potions to contact the standpipe 1578, while in Figure 15B, the adjustable positioning mechanism has been adjusted, e.g., moved in the direction of arrow M-112 in a direction perpendicular to the center axis of the pipe (marked with an "X" and 1580), so that the housing and the contact portions are in contact with the same standpipe 1578.

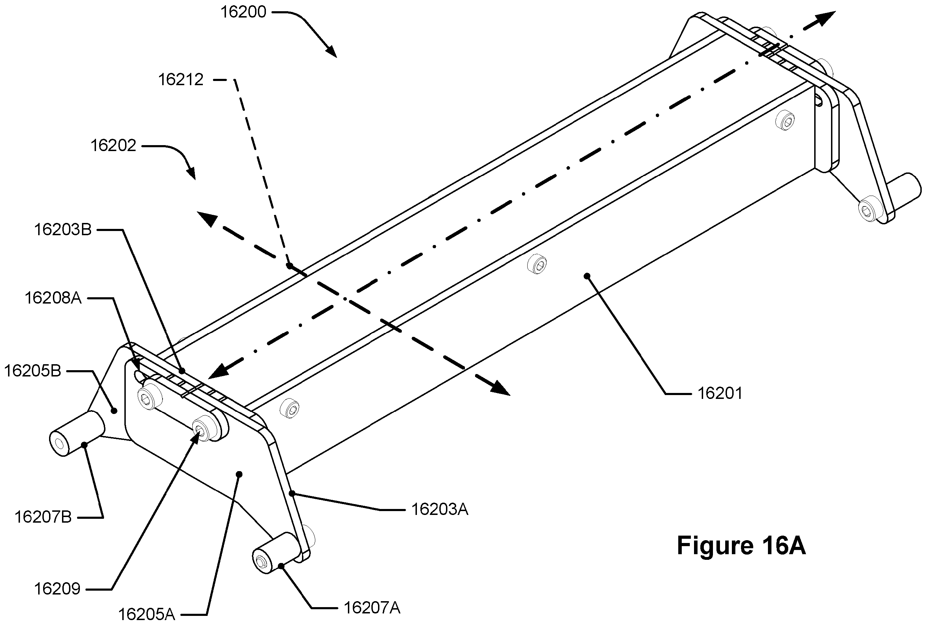

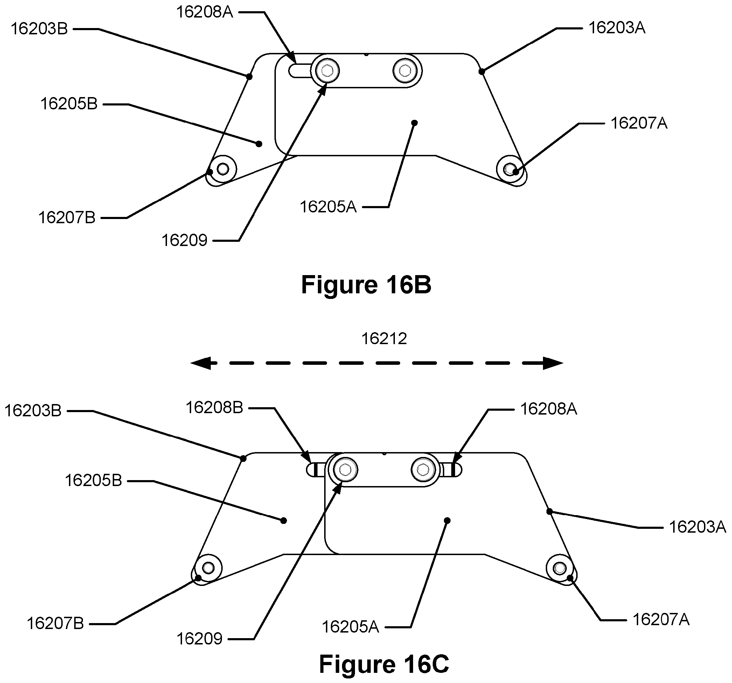

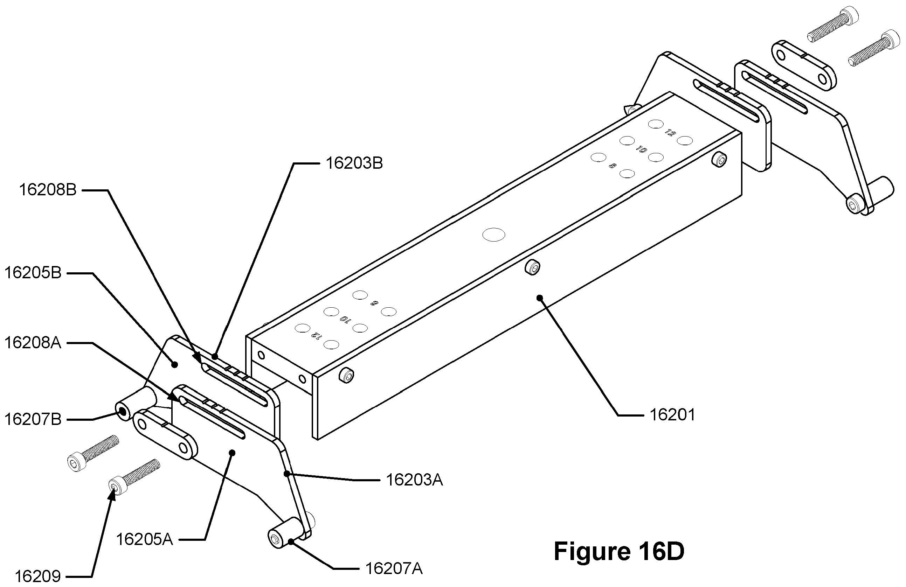

Figures 16A through 16D depict a second example housing which also includes an adjustable positioning mechanism similar to that shown in Figures 12 through 15B. This second example housing 16200 includes similar some similarly labeled features as in Figures 12 through 15B, including the bracket body portions 16205 which are also movably connected to the body 16201 like described above using slots and screws as seen in these Figures.

The contact portions may provide an attachment surface for an attachment mechanism to contact the contact portions in order to connect the contact portion to the standpipe (e.g., standpipe). These contact portions may be connected to the standpipe in various ways. In some embodiments, this may include adhering the contact portions to the standpipe using an adhesive material or a weld. In some other embodiments, the attachment mechanism may be configured to enable the housing to be removably attached without damaging the standpipe. This may include using a strap, band, pipe band, or the like that is positioned around one or more of the contact portions and the standpipe; this may also include a magnetic attachment mechanism. Referring back to Figure 15A, an example pipe band is depicted extending around both contact portions and the standpipe which causes the housing to be connected to the standpipe. An example connection mechanism, e.g. a band 15113 is depicted in Figure 15A and extends around the contact portions and the standpipe in order to secure the housing to the standpipe.

Additional configurations and descriptions of housings and their connections are provided in U.S. Provisional Patent Application No. 62/823,539, filed March 25, 2019, and are hereby incorporated by reference in its entirety.

### Examples of Pipe Condition Detection

In some embodiments, the fluid flow processing module may also be configured to detect and determine pipe conditions. In some embodiments, the fluid flow processing module may also include one or more acoustic sensors that can be used to detect various conditions that exist within a pipe, including wall loss, bore loss, other conditions of the pipe wall (e.g., fractures, holes, pits, cracks, etc.) and pipe-related events elsewhere in the pipe system. In some embodiments, this includes pipes and the pipe system to which the water release assembly, such as a standpipe, is connected. Wall loss may be generally described as a reduction of the pipe wall material, such as by corrosion and metal loss of the pipe wall. Bore loss may include the reduction of a pipe's nominal pipe size, bore, or internal diameter, which may include buildup of material, such as biological sludge, grease, oxidation products (including corrosion products), tuberculation, and blockages from material originating upstream. In addition to pipe conditions, an acoustic sensor may be able to detect certain properties of a fluid flowing within a pipe. For example, the sensor may be able to determine, at least roughly, whether fluid is flowing, flow rate, and/or flow state (e.g., whether the flow is laminar, turbulent, or transitional). Flow noise has been found to correlate with flow rate in various ranges. Determining whether a flow is laminar, turbulent, or transitional can be assisted by knowing, at least roughly, the fluid's flow rate, which may be derivable from another readings by another sensor such as a thermal flow condition sensor. In some embodiments, this includes determining the flowrate using the ultrasonic transducers described herein.

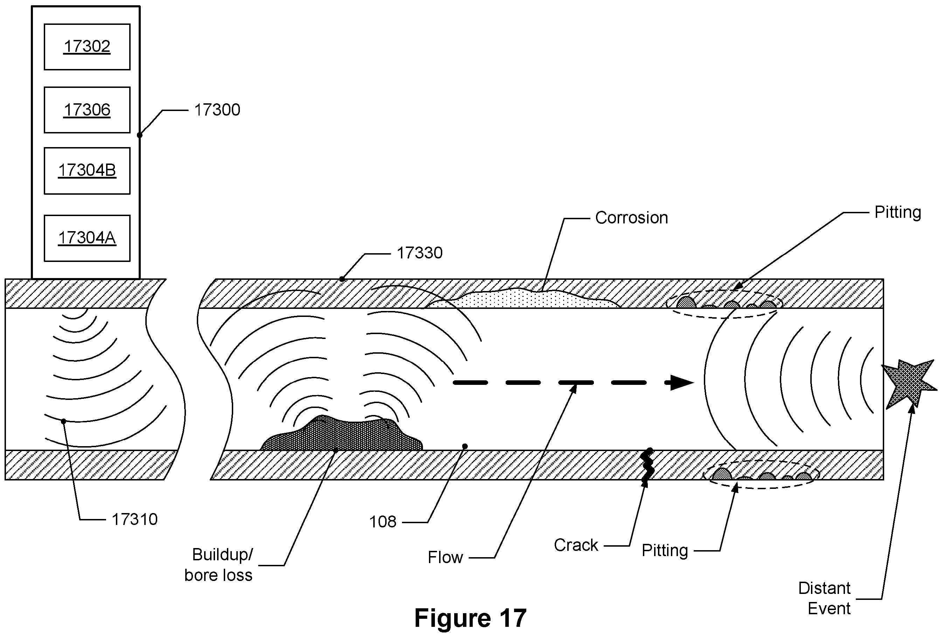

Figure 17 depicts an axial cross-section of a pipe with numerous pipe conditions. The figure also shows one example of a fluid flow processing module 17300 on a section of standpipe 1778 that is connected to a pipe system having a pipe 17330 with various conditions. The fluid flow processing module 17300 includes multiple acoustic transducers including, in some instances, small microphones 17304A and 17304B, and a large microphone 17306 that is larger than the other two microphones 17304A and 17304B. These acoustic sensors are located adjacent to the standpipe to facilitate detection of various conditions of the pipes connected to the standpipe, including pipe 17330. In Figure 17, bore loss is illustrated as a buildup within the pipe interior ,while wall material loss is illustrated as corrosion of the pipe wall. A crack in the pipe wall, as well as pitting on the interior and exterior wall surfaces, are also illustrated. The figure also illustrates that the microphones can pick up a distant event (e.g., a pipe burst, a pipe leak, a frozen pipe, a blockage, a tap opening or closing, etc.).

The microphones 17304A, 17304B, and 17306 are configured to detect acoustic signals of the pipes to which the standpipe is connected which can be measured and analyzed in order to determine the presence of any of these pipe conditions. For instance, microphone 17306 may be configured detect the signal produced by the distant event, such as a burst pipe, while microphones 17304A and 17304B may detect the signals produced by more local events such as pipe defects or fluid flow close to the fluid flow processing module 17300. In some embodiments that have a speaker 17302 (which may be a solenoid), the speaker 17302 may be configured to generate one or more acoustic signals that are transmitted onto the standpipe and that travel to, contact, and reflect against the pipes to which the standpipe is connected and any defects or buildups in these pipes (e.g., cracks, corrosion, or scum within the pipes). The generated acoustic signals, as modified by the pipes or material within it, can be detected by one or more of the microphones. For example, speaker 17302 may generate an acoustic signal 17310 that travels to and contacts the identified buildup, and reflects back to, and is detected by one or more of the microphones 17304A, 17304B, and 17306.

In some embodiments, the large microphone 17306 may be used to listen for abnormalities at distant locations within the pipe, such as a single distant event, which may be represented as a signal spike, as well as for sounds indicative of flow within the standpipe. If such an event is detected, then a notification or alert may be generated and sent to an external device (e.g., a controller with a memory, described herein, may include instructions for detecting this event, and generating and transmitting the notification). One or more of the microphones, e.g., large microphone 17306, may also be used to detect a deviation of acoustic signals over one or more periods of time. For instance, a microphone may receive acoustic signals over a particular time period (such as days, weeks, or even months if the standpipe is installed for such a period), which may be recorded and compared against currently collected signals. If the current and historical signals deviate by more than a threshold amount or are otherwise sufficiently different, the sensor or logic configured to interpret the sensor signals can determine that a particular event has occurred. Alternatively or in addition, a deviation may indicate wall loss, bore loss, or other deleterious pipe condition. In certain embodiments, one or more of the microphones, e.g., large microphone 17306, may also be configured to determine the presence of flow within the pipe 108.

In certain embodiments, an acoustic sensor determines the resonant or ringing frequency of the pipe. In certain embodiments, the acoustic sensor determines when (and optionally by how much) the resonant or ringing frequency changes from a prior value. To measure the resonant frequency, the pipe may be excited by an impulse or by a swept frequency. The amplitude and decay rate of the pipe's response may be repeatedly assessed over time (during similar conditions such as noise level) and the change in the response indicates the change in the pipe's wall.

In certain embodiments, the large microphone 17306 in Figure 17 used in the fluid flow processing module may also be able to reliably detect acoustic signals over a wide frequency range, that may roughly correspond to the frequency range of human hearing. In one embodiment, the lower end of the microphones detectable range is about 5 Hz to about 20 Hz. In one embodiment, the upper end of the detectable frequency range is about 20 kHz, to about 25kHz. In certain embodiments, the sensitivity of the microphone is at least about -10, decibels (dB), or at least about -30 dB, or at least about -40dB, which may be frequency dependent. In certain embodiments, the large microphone used in the in the fluid flow processing module can interpret acoustic signals over a dynamic range of at least about 70 dB, which may be frequency dependent. Examples of suitable microphones include piezoelectric microphones or transducers that capture or sense vibrations and acoustic signals, microphones with high sensitives (e.g., up to about -30dB), and those microphones used in musical applications. The size of the large microphone may be selected based on the standpipe diameter or the pipe diameter of those pipes to which the standpipe may be connected In certain embodiments, the size of its largest dimension is between about 0.3 to 2 inches. In one example, the microphone's size is at most 0.8 inches for a pipe having a diameter of about 12 inches or less, for instance.

In certain embodiments, one or both of the small microphones 17304A or B used in the fluid flow processing module is able to reliably detect acoustic signals down to at least about 10 Hz to about 20Hz. In certain embodiments, one or both of the small microphones are able to reliably detect acoustic signals at frequencies up to at least about 20 or at least about 25 kHz. In certain embodiments, one or both of the small microphones has a sensitivity of at least about -10 dB, or at least about -30dB, or at least about -40dB, for example, which may be frequency dependent. In certain embodiments, one or both of the small microphones can interpret acoustic signals over a dynamic range of at least about 90 dB, which may be frequency dependent. Examples of suitable microphones include condenser microphones that may include a buffer. The small microphones may be selected based on the standpipe diameter or the pipe diameter of those pipes to which the standpipe may be connected, and in certain embodiments, are at least 0.2 inches in diameter for a pipe having a diameter of about 12 inches or less, for instance. One example of a microphone suitable for use as the small microphone is the PUI Audio, product number POM-2730L-HD-R.

In certain embodiments, the speaker 17302 used in the fluid flow processing module is an acoustic exciter such as a voice coil or a device capable of delivering a mechanical ping or strike, such as a solenoid. In certain embodiments, speaker 17302 is configured to produce an excitation signal with a fast rise time than can excite harmonics in the pipe or fluid conduit. In certain embodiments, the speaker 17302 used in the fluid flow processing module has a dynamic range of at least about 100 dB. In certain embodiments, the speaker used in the in the fluid flow processing module can produce low frequency acoustic signals of about 30 Hz or lower. In certain embodiments, the speaker used in the fluid flow processing module can produce high frequency acoustic signals of about 20 kHz or higher. Examples of suitable speakers include those having a relative small size (appropriate for the pipe), are mechanically coupled (as opposed to air coupled) to the standpipe, consume low power, and are energy efficient. One example of a suitable speaker is the DAEX-13-4SM Skinny Mini Exciter Audio and Haptic Feedback 13mm 3W 4 Ohm by Dayton Audio. In some embodiments, similar to above, the size of the acoustic exciter may scale with the pipe diameter, such that larger acoustic exciters may be used for larger and/or thicker pipes. For instance, an exciter that is about 1.5 in by 0.5 in (pipe facing surface) may be used on a standpipe having a diameter of about 12 in or less.

In some implementations, the two microphones (e.g., small microphones 17304A and 17304B or the two ultrasonic transducers described above) may also be used to determine the presence and flowrate of flow within the standpipe. In some embodiments, only one microphone is needed to determine the presence of flow within the standpipe.

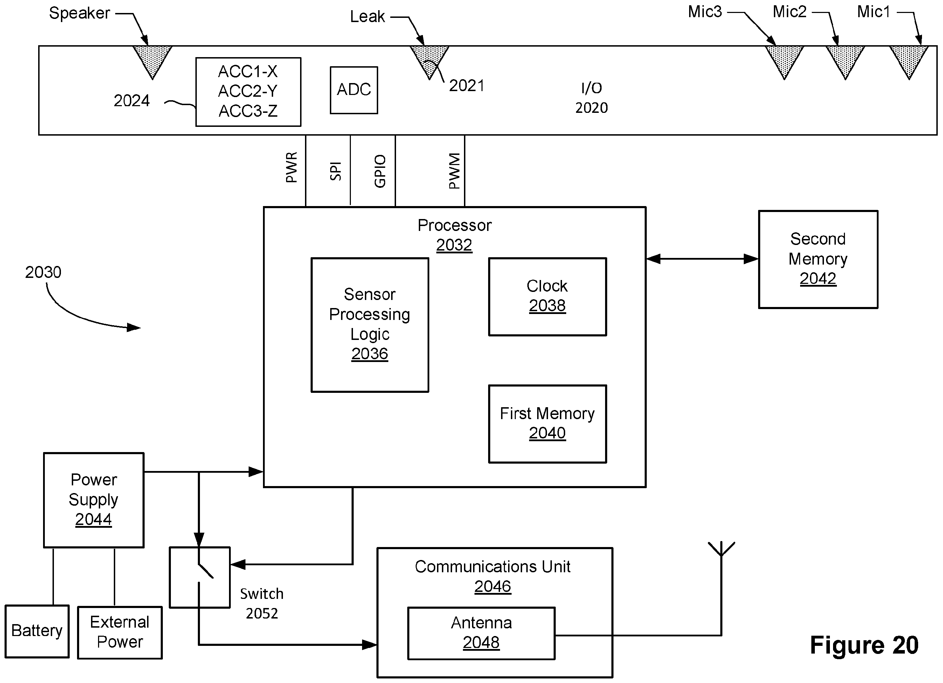

In some embodiments, as described above, the small microphones 17304A and 17304B may be used in conjunction with the speaker 17302 to determine the presence and location of various pipe conditions, such as bore loss, wall loss, leaks, and cracks. A controller may include instructions to cause the speaker to emit signals of a defined type (e.g., having a defined frequency and intensity). The controller may also be configured to interpret and process the signals received by one or more of the microphones. In particular, the controller may be configured to determine whether pipe conditions exist, which conditions exist, and the location of such conditions. An example of a controller is described with reference to Figure 20 discussed below.

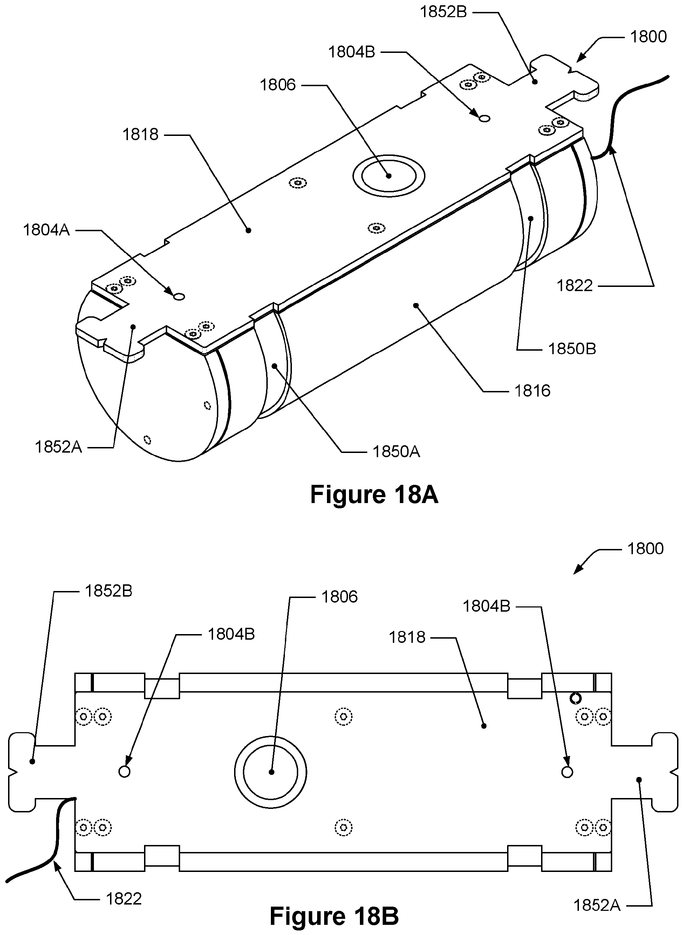

Figures 18A and 18B depict another example fluid flow processing module. In Figure 18A, the fluid flow processing module 1800 includes a housing 1816 and a face 1818 with ports in which the acoustic sensors 1804A and 1804B (small microphones), and 1806 (large microphone) may be positioned. In some embodiments, the small microphones 1804A and 1804B are flush with the face 1818 while the large microphone 1806 may be recessed and offset from the face 1818 such that they are within the housing 1816. The speaker may be positioned completely within the housing 1816. In some embodiments, the second example fluid flow processing module depicted in Figures 18A and 18B is configured to detect the condition of a pipe using the solenoid (not depicted) and the microphone 1806 by using the solenoid to deliver a mechanical ping or strike to the standpipe. It may accomplish this by producing an excitation signal with a fast rise time than can excite harmonics in the pipe or fluid conduit. In certain embodiments, the solenoid 1802 used in the fluid flow processing module has a dynamic range of at least about 100 dB. In certain embodiments, the solenoid 1802 used in the in the fluid flow processing module can produce low frequency acoustic signals of about 30 Hz or lower. This fluid flow processing module 1800 may also include a processing module described below.

In some implementations, a sound conductor may be positioned between the large microphone 1806 and the standpipe wall, such as a petroleum jelly or grease, in order to facilitate the transmission of acoustic signals from the standpipe to the large microphone 1806. In certain embodiments, the large microphone is in acoustic contact with the standpipe through a coupling agent (grease, etc.) but the two small microphones are coupled through the air. In some cases, even one or both of the small microphones employs a coupling agent. In some implementations, using two axially separated, air-coupled microphones allows good phase response, which can be useful in determining the direction of an event (with respect to the sensor), etc.

The fluid flow processing module depicted in Figures 18A and 181B may also include a leak detector 1822 as described herein. In some implementations, this leak detector 1822 is configured to detect a leak in a standpipe by detecting the presence of a liquid on and/or near the standpipe. For example, the leak detector 1822 may be a cable with various regions of exposed, uninsulated wire that, when contacted by the liquid, are configured to create a signal, or cause the lack of a signal, which indicates the presence of a liquid which in turn may be used to detect the presence of a leak. The leak detection element (e.g., the exposed wires) of detector 1822 may be positioned on the standpipe as well as on a location near the standpipe, such as the ground, in order to detect the presence of the liquid that may be on or around the standpipe.

The fluid flow processing module may include features that enable it to engage with a pipe or other type of fluid conduit without damaging or penetrating the pipe. As described, the pipe condition sensors described herein enable noninvasive sensing and detection of conditions within a standpipe (e.g., fluid flow and flow characteristics, wall loss, bore loss and pipe-related events elsewhere in the pipe system) and these features further enable the fluid flow processing module to provide noninvasive sensing and detection. These features, which may be considered positioning or mounting features, may include structural elements on one or more aspects of the fluid flow processing module and fluid flow processing module 1800 depicted in Figures 18A and 18B includes examples of such features. A first example of these features is the two grooves 1850A and 1850B located on the exterior of the housing, or cover, of the fluid flow processing module. Straps, bands, zip ties, rope, cable, or other securement element may be wrapped around the standpipe and the fluid flow processing module, positioned within the grooves 1850A and 1850B, and then tightened in order to position and secure the fluid flow processing module onto the standpipe.

A second example of these features is the two tabs 1852A and 1852B which extend from the fluid flow processing module 1800 in Figures 18A and 18B. Similar to the grooves 1850A and 1850B, straps, bands, zip ties, cable, or other securement items may be wrapped around the standpipe and the tabs 1852A and 1852B, and then tightened in order to position and secure the fluid flow processing module 1800 onto the standpipe. Use of the tabs 1852A and 1852B for securing the fluid flow processing module 1800 may provide certain advantages. For instance, using the tabs allows for the remainder of the fluid flow processing module 1800 to be unencumbered and therefore accessible for setup and maintenance activities, such as connecting wires, checking and fixing components, and placing fresh batteries in the fluid flow processing module. In some embodiments, the fluid flow processing module 1800 may have a multi-part housing that is comprised of one or more plates and a cover. The one or more plates or a separate structure may include the processing module, one or more of the sensors, and the tabs 1852A and 1852B. These embodiments allow the one or more plates to be positioned onto and secure to the pipe with the tabs while the cover is not attached which may allow for more accurate and precise positioning of the sensors and plates onto the pipe as well as access to the internal elements of the fluid flow processing module for setup and maintenance of the fluid flow processing module.

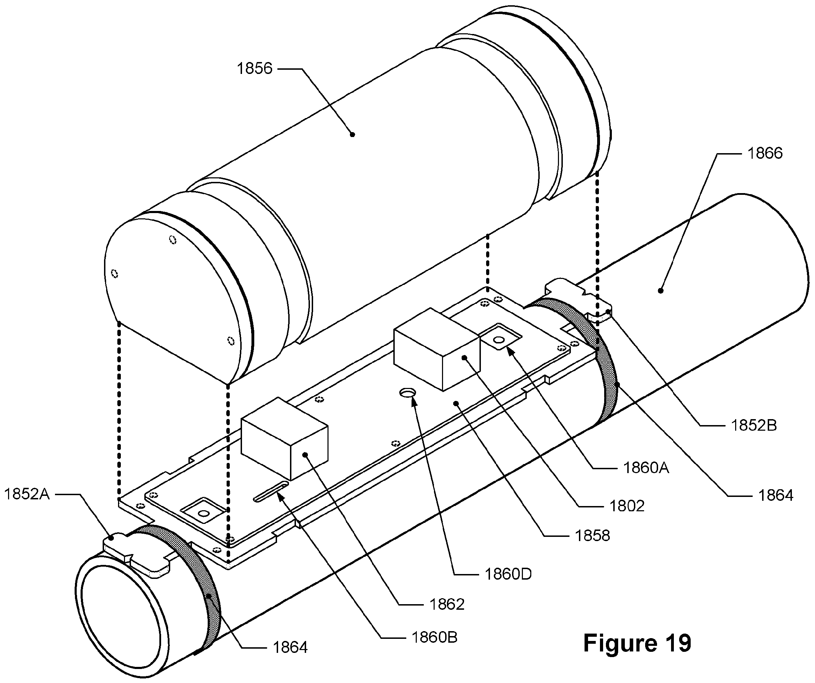

Figure 19 depicts a partially exploded view of an example positioning of the fluid flow processing module of Figure 18 to a portion of a standpipe. Here, the fluid flow processing module 1800 includes a cover 1856 that is separated from plate 1858 (which includes the face 1818); the plate 1858 includes ports 1860A through 1860C, or holes, through which sensors and wires for sensors may run between the processing module, represented as box 1862, and the various sensors. For instance, the large microphone 1806 may have electrical connections that extend through port 1160B, the two microphones 1804A and 1804B may be positioned in ports 1806A and 1806C; the solenoid 1802 (represented as box 1802) is also seen within the housing and directly connected to the plate 1858. The plate 1858 also includes tabs 1852A and 1852B; fasteners 1864, such as zip ties or straps for example, may be wrapped around these tabs 1852A and 1852B and the standpipe 1866, as shown, in order to secure the plate 1858 to the standpipe 1866. Positioning and securing the plate to the standpipe may therefore position the sensors onto and against the standpipe thus allowing them to sense conditions of and within the standpipe and pipes to which the standpipe is connected; doing so while the cover 1856 is removed allows for access to the sensors, their electrical connections, and the processing module which may be advantageous during installation and maintenance because, for example, the internal elements of the fluid flow processing module are accessible for connecting elements together, performing calibration steps, checking elements of the unit, and replacing parts, such as a battery. Afterwards, the cover 1856 may be attached to the plate 1858.

Although the fluid flow processing module 1800 includes both tabs and grooves, some implementations of the fluid flow processing module may only have one of these features, such as only the tabs 1852A and 1852B.

Figure 20 schematically depicts a second example processing module 2030. This module is similar to that of Figure 4 above with some noted differences. The depicted processing module 2030 includes an input/output unit 2020 that includes a first input 2021 for connection to a leak detector and an accelerometer 2024 that is depicted as a three-axis accelerometer. The input/output unit 2020 may include an analog to digital converter 2025, and the input/output unit 2020 may be configured to receive power from the power supply 2044 for various purposes including to power one or more peripherals such as one more speakers and/or microphones of a fluid flow processing module .

As depicted, input/output unit 2020 includes various ports or electrical connectors for communicating with one or more acoustic sensing elements (e.g., microphones) and one or more sound producing elements (e.g., speakers) on a fluid flow processing module. The input/output unit 2020 may also include ports for connecting to any sensor described herein. For example, input/output unit 2020 includes electrical connectors for receiving electrical signals corresponding to acoustic signals detected by microphones. These may correspond to the microphones shown in Figure 17 and described above. Additionally, input/output unit 2020 includes one or more electrical connectors for providing power to one or more speakers (e.g., the speakers shown in Figure 17) of a fluid flow processing module. Still further, input/output unit 2020 includes electrical connectors for receiving electrical signals corresponding to acoustic signals detected by the microphones. The electrical signals provide information about, at least, the frequency and intensity of the acoustic signals received by each microphone. Input/output unit 2020 may have ports for additional components such as a status light. In some cases, the input/output unit 2020 has ports for components of other types of sensor that may share processing unit 2030 with an acoustic sensor. Examples of such other types of sensor include flow condition sensors (e.g., ultrasonic sensors). Ports for these additional types of sensor are not depicted in Figure 20.

The pipe condition processing module 2030 also includes one or more processors (shown as processor 2032) that includes a clock 2038, a first memory 2040, and sensor processing logic 2036. The first memory 2040 may be a program memory that stores instructions to be executed by the processor 2032 and buffers data for analysis and other processing. The sensor processing logic 2036 (which may also or alternatively be instructions stored on the first memory 2040) is configured to detect signals, such as current, impedance, or voltage values, generated by any of the sensors, including the microphones of the fluid flow processing module and the leak detector 2022. For example, as described above, sensor processing logic 2036 may be configured to receive data representing acoustic frequency and/or intensity from sensing elements including microphones of a fluid flow processing module. The sensor processing logic 2036 may also be configured to determine and store values of resistance and voltage or their corresponding values of acoustic frequency and/or intensity or relative to a baseline values measured during calibration or normal operation.

The clock 2038 may be a real time clock or a timer. The depicted processing module 2030 also includes a second memory 2042 that may be a rewritable memory that is configured to store data generated by any of the sensors or other components described herein. A power supply 2044, which may include a battery, is also a part of the depicted fluid flow processing module 2030 and is configured to provide power to the elements of the fluid flow processing module 2030, such as the processor 2032, a communications unit 2046, and any of the acoustic signal sensing and generating elements, as described above.

The processor 2032 may execute machine-readable system control instructions which may be cached locally on the first memory 2040 and/or may be loaded into the first memory 2040 from a second memory 2042, and may include instructions for controlling any aspect of the fluid flow processing module 2030. The instructions may be configured in any suitable way and may by implemented in software, firmware, hard-coded as logic in an ASIC (application specific integrated circuit), or, in other suitable implementation. In some embodiments, the instructions are implemented as a combination of software and hardware.

The communications unit 2046 may be the same or similar to the communications unit 446 above. For example, this communications unit 20346 includes an antenna 2048. The communications unit 2046 may be configured to acquire location data about the location of the fluid flow processing module 2030using the antenna 2048 which is configured to connect with an external location device and receive location data from the external location device. The location data may include the latitude, longitude, and altitude, for example, of the fluid flow processing module 2030 which houses the first antenna 2048.

As further depicted in Figure 20, and similar to Figure 4, the processor 2032 is connected to a switch 2052 that is interposed between the power source 2044 and the communications unit 2046. The processor 2032 may cause the switch 2052 to close, which causes power to be delivered to the communications unit 2046, or to open which stops the power to the communications unit 2046.

In certain embodiments, like described above with respect to Figure 4, the second memory 2042 is configured to store data received from the processor 2032 and the antenna 2048. Firmware updates, which may be received from the antenna 2048, are stored at an appropriate location (e.g., second memory 2042) accessible to the processor 2032. The processor 2032 is also configured to access and transmit data stored in the second memory 2042 over the antenna 2048. In some embodiments, the elements of the processor 2032 may be communicatively connected with each other and the processor 2032 is configured to control each such element, as well as any element of the fluid flow processing module 2030.

In some embodiments, the fluid flow processing module is also configured to connect the accelerometer to the power supply 2044 as well as receive signals, such as voltages, from the accelerometer 2024. The accelerometer 324 may be continuously powered by the power supply 2044 so that the accelerometer 2024 can detect events that generate movement or vibrations of the standpipe to which the fluid flow processing module 2030 is connected, including movement of the standpipe from a non-vertical orientation (e.g., horizontal or substantially horizontal, such as within +/- 20% of horizontal) with respect to the ground of the Earth, to a vertical or substantially vertical position (e.g., within +/- 20% of vertical) with respect to the ground. As described below, this data may assist with "waking up" the processing module when the standpipe is moved to an in-use position as described below.

For example, in some embodiments, the processing module 2030 may be configured to reside in a sleep state in which only limited power is available to the processor 2032 and the accelerometer 2024, and few if any operations are performed. In this state, the processor 2032 can receive signals from the accelerometer 2024 and/or one or more acoustic sensor, such as a microphone, and at the same time, the communications 2046 module is not powered on. The processor 2032 may exit the low power state, and "wake up", in response to detecting a signal of defined magnitude or other characteristic from any of the sensors, including the accelerometer 2024, the leak detector and/or the fluid flow processing module. Depending on the signal detected, the processor 2032 may simultaneously or sequentially cause various functions to be performed, as described herein. For instance, standpipes may be stored horizontally on a truck or service vehicle, or non-vertically in a storage facility. When the standpipe is used to draw water from a source, the standpipe may be moved and oriented in a vertical orientation such that the center axis of the majority of the standpipe, axis 205 in Figure 2, is in a vertical orientation relative to the ground (e.g., perpendicular to the ground) or substantially vertical orientation (within +/- 20% of vertical). The processing module, using as least the data from the accelerometer, is able to detect the change in orientation of the standpipe and is configured to "wake up" the device when this movement is detected so that the fluid flow processing module can detect flow through the standpipe.

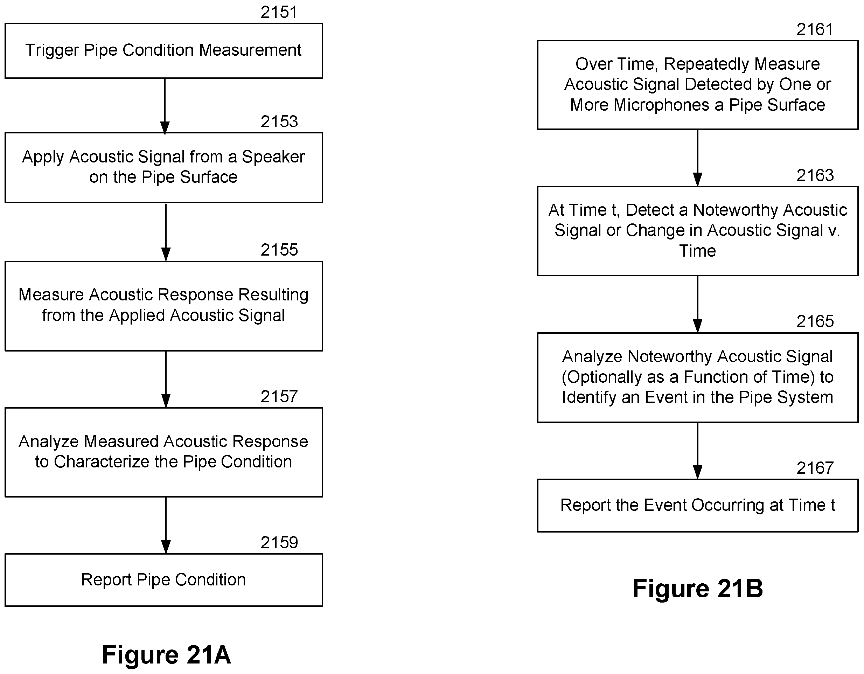

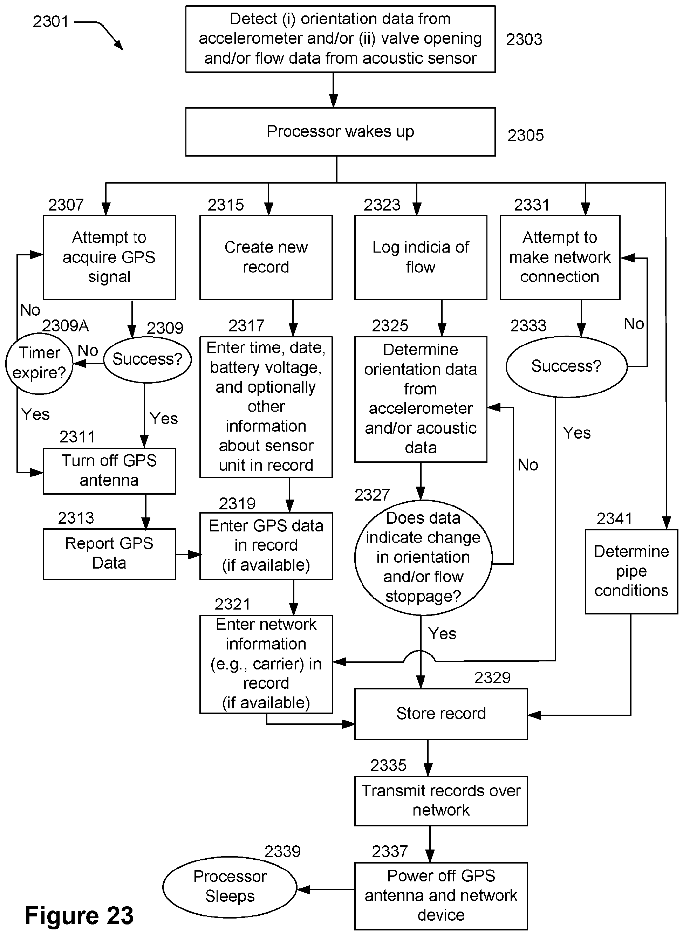

Figures 21A and 21B present flow charts for treating acoustic measurements such as those described herein. As indicated, in certain embodiments such as Figure 21A, operations using acoustic sensors may follow this sequence: (a) determine that a triggering event has occurred (block 2151), (b) in response, producing an acoustic signal to the pipe (block 2153), (c) measure a resulting acoustic response (block 2155; after applying producing the acoustic signal and optionally various microphone positions and/or time steps), (d) determine a pipe condition based on the measured acoustic response (block 2157), and (e) optionally report the determined pipe condition (block 2159). Referring back to Figure 5 described above, blocks 2151 through 2159 may be performed after the processing wakes up in block 505 and the information relating to the determined pipe condition(s) of block 2159 may be entered into the new record of block 517 which is stored as indicated in block 529 and transmitted over the network per block 535. See also the discussion of Figure 23 below.

Also, as indicated in Figure 21B, in certain embodiments, operations using acoustic sensors may follow the following sequence: (a) repeatedly measure an acoustic signal using one or more microphones of the fluid flow processing module (block 2161), (b) in one of the measurements (associated with a time t), detect a noteworthy acoustic signal and/or a noteworthy change in acoustic signal (block 2163), (c) based on noteworthy signal or change in signal, determine an event or a new pipe condition occurring at time t (block 2165), and (d) optionally reporting the event or new pipe condition (block 2167). This technique may be used when standpipes are installed at a location over a period of time, such as hours, days, weeks, months, or years.

In certain embodiments, operation of acoustic sensors and associated logic includes: (a) applying acoustic stimulus at time 1, (b) measuring an acoustic response at time 1, (c) applying an acoustic stimulus at later time 2, (d) measuring an acoustic response at time 2, and (e) determining whether difference in acoustic response at times 1 and 2 indicates a pipe condition issue.

In certain embodiments, operation of acoustic sensors and associated logic includes: (a) monitoring steady state acoustics from the pipe, (b) detecting a change (e.g., an unexpected pulse) in the acoustics, and (c) based on the acoustic change, determining a type of event that caused the acoustic change. In certain embodiments, monitoring acoustics from a pipe may be performed in a manner that consumes relatively little power (particularly if a battery is used to power the sensor). For example, a microphone such as the large microphone shown and described with respect to Figure 1 may remain on to monitor acoustics but without providing signals to the processing logic. This allows monitoring without performing analog to digital conversion, which is an energy intensive procedure. In some implementations, the monitoring microphone or associated circuitry compares acoustic signals picked up by the microphone against a threshold, and only when the microphone or associated circuitry determines that an acoustic signal is greater than the threshold does the system begin to acquire data from other sources (e.g., other microphones and/or flow sensor(s)) and/or convert analog data to digital data for triggering further analysis of the pipe or flow condition. In some cases, detecting large acoustic signals triggers the system to issue pulses or stimuli from a speaker so that the fluid flow processing module can assess pipe condition. In some embodiments, in lieu of or in addition to monitoring acoustics with a microphone, the system uses an accelerometer to trigger the analog to digital conversion and/or operation of other sensors in the system. Again, these techniques may be used when standpipes are installed at a location over a period of time, such as hours, days, weeks, months, or years

Data from acoustic sensors may be processed in various ways to improve the usefulness of the readings. Frequently, the signals from microphones are noisy and/or have many frequency components. As such, they sometime require significant signal processing. Appropriate signal processing may take various forms. With a complex signal (e.g., multiple tones with noise), cross correlation can help identify the delay between two signals that is not easily perceived from simple observation and provide a mathematical tool to measure delay. This is useful for a variety of analysis but is particularly valuable in determining which direction a particular sound came from. If for example a microphone picks up leaks at 1kHz, the signal processing may apply a 1kHz bandpass filter (e.g., one that does not induce significant phase shift) around the signal from two microphones separated by a known distance "x". Then using a cross correlation function, the processing logic can determine the speed of signal propagation between the microphones (by the delay time) and the direction the sound is coming from (by the sign of the delay). In typical systems, the cross correlation is not clean and typically the logic sees multiple points where signals align for better or worse. Harmonics and sampling artifacts can produce interference. Accounting for the speed of sound, at least approximately, the processing logic can narrow the possibilities by considering options at approximately the correct delay time.

In some embodiments, where in the acoustic signals are particularly noisy or have apparently multiple frequency components, a Fourier transform may be employed to convert time domain temperature measurements to frequency domain temperature measurements.

In some embodiments, wall loss or other wall condition assessment is based on observing changes in the natural frequency of the pipe and/or the damping of ringing in the pipe. As noted, the response signal frequency(ies) may be determined by analyzing data collected by a microphone, accelerometer, etc.

In one example, a solenoid or other stimulus applicator is used as a striker to excite the pipe wall with an impulse. A microphone or other acoustic transducer picks up frequency signals in a way that can discriminate between frequencies. As an example, the processing logic identifies the natural frequencies (e.g., through a Fast Fourier Transform (FFT) or some other means) and identifies any changes in the natural frequencies from a baseline frequency signature or other baseline characteristic(s) indicating wall loss.

As an alternative, or in addition, to considering natural frequencies of the pipe response to a ping or other stimulus, the processing logic may consider damping of the stimulus. For example, the processing logic may consider an envelope of a ring down signal and from it, determine a time constant of that envelope which can determine if the pipe is full of liquid or dry, and, in some cases, whether there is something creating additional damping such as bacterial mats, large amounts of sediment, or tuberculation within the pipe being assessed.

In certain embodiments, the processing logic is configured to determine whether a pipe's or a pipe network's natural frequency decreases from a baseline. The occurrence and/or magnitude of such decrease is used to assess the presence or degree of wall thinning. See for example, the discussion in S. Han et al., "Detection of pipe wall-thinning based on change of natural frequencies of shell vibration modes," 19th World Conference on Non-Destructive Testing 2016, (//www.ndt.net/article/wcndt2016/papers/th3c2.pdf), which is incorporated herein by reference in its entirety.

In certain embodiments, the processing logic is configured to determine the average radius of a pipe (or a change in the average radius) acoustically. See for example, the discussion in US Patent No. 6,000,288 to Kwun, which is incorporated herein by reference in its entirety. Such assessment employs, in certain embodiments, information about the pipe wall material. While Kwun identifies magnetostrictive sensors, a similar analysis may be accomplished using microphones, accelerometers, and/or strain gauges.

The same hardware may be employed for assessing various wall conditions including average pipe inner radius, specific instances of pipe wall thinning, and the presence of deposits, sediments, etc. Collecting data using various types of sensors (e.g., strain gauges, accelerometers, and/or microphones) and/or analyzing collected information using multiple algorithms, such as those for identifying wall thinning and average pipe radius, may provide a higher confidence in an ultimate assessment of pipe wall condition.

In certain embodiments, a pipe condition assessment is made in the context of current conditions, which may different from previous or future conditions. Thus, a pipe condition assessment may account for current temperature, fluid pressure, fluid flow, and/or other ambient factor that impacts signal propagation in the pipe. In some embodiments, the system includes one or more sensors, and associated logic, for measuring and/or determining temperature, fluid flow rate, hoop stress, etc. to appropriate adjust pipe condition assessment.

As indicated, a fluid flow processing module may directly measure the acoustics of pipes to which it is directly and indirectly connected including directly measuring a response to an acoustic stimulus applied to a standpipe surface which propagates into the pipes to which the standpipe is connected. By measuring and/or monitoring the intensity, frequency, and/or delay of an acoustic signal received, a fluid flow processing module may be used to determine various properties of the pipes and pipe system. As stated above, examples of such pipe conditions are the presence of a crack or other weakness in the pipe wall, and the presence of a material buildup on a pipe wall. Characteristics of an acoustic signal can help determine not only whether the pipe has a weakness or buildup up, but also the nature of any such weakness or buildup. For example, the acoustic signal may indicate how much material has been removed from the pipe by corrosion, how much material has built up on the pipe interior, the size of a crack, etc. The acoustic signal may also indicate a condition of the flow within a pipe such as the flow rate of the fluid, whether the fluid is leaking, whether the flow is laminar or turbulent, etc. Eddies, mixing, etc. caused by vortices in turbulence can create detectable features in temperature gradients or changes in acoustic signatures.

The conditions to be detected may be present in various contexts such as utilities, municipalities, plants, large buildings, compounds, complexes, and residences. In other words, the sensors used to detect the conditions are present on standpipes employed in any such location.

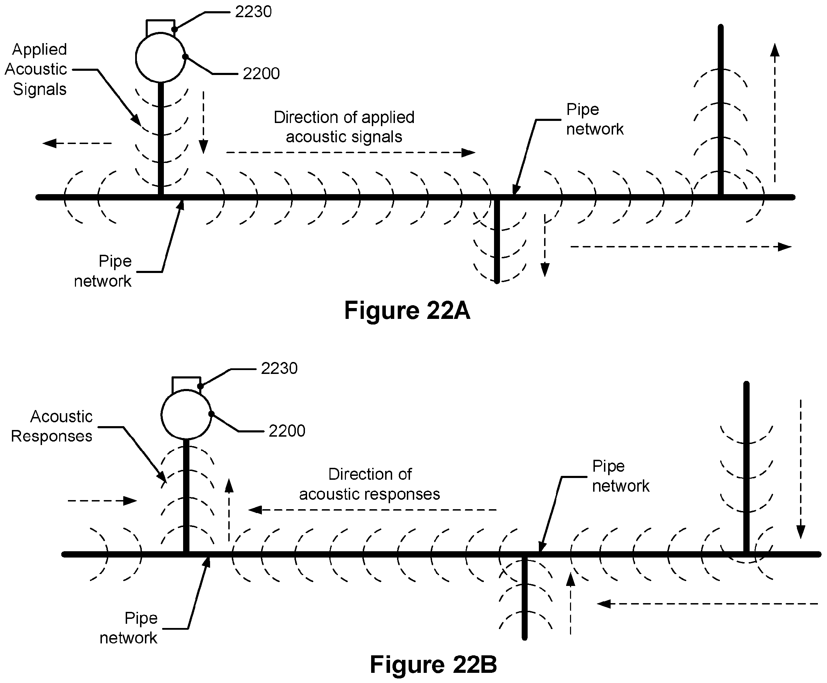

Figures 22A and 22B depict a top view of an example pipe network with a tap connected to a standpipe. As can be seen, standpipe 2200 includes a fluid flow processing module 2230 with acoustic sensors configured to detect pipe conditions like described above. In some embodiments, like shown in Figure 22A and illustrated in Figure 21A, the fluid flow processing module 2230 may apply an acoustic signal to the standpipe, as indicated in block 2153 of Figure 21A, which propagates into the pipe network to which the standpipe is connected. As illustrated in Figure 22B, like in block 2155 of Figure 21A, the acoustic response or responses may propagate back to the fluid flow processing module 2230 where the acoustic sensors, such as the large and/or small microphones, detect and measure these responses.

Figure 23 depicts another example technique of operating a water release assembly. Figure 23 is similar to Figure 5 described above, but with noted differences. Here in Figure 23, process operations may be implemented by the components of any of the processing modules described herein which include acoustic sensors and/or an accelerometer, including module 2030 and those modules described with respect to Figures 9A through 20. The example technique 2301 begins in block 2303 in which orientation data from the accelerometer and/or acoustic data indicating flow and/or a valve opening is detected. As described above, this may include accelerometer data indicating that the standpipe has been moved to a vertical (or substantially) orientation. This may also include acoustic data detected by one or more acoustic sensors that indicates a valve has been opened to flow water into the standpipe and/or that flow is occurring within the standpipe. For example, if a water release assembly has been installed at a location for a period of time, such as minutes, hours, days, weeks or months, the orientation data may be less relevant to waking up the processor because the assembly has been in the same position for the period of time; in some such instances, acoustic signals caused by flow within the assembly or other flow-related event detected by one or more acoustic sensors may cause the processor to wake up. Referring back to Figure 5, for processing modules that include an accelerometer and/or at least one acoustic sensor, block 503 may be implemented like block 2303.

Following the detection of block 2303, the processor wakes up in block 2305 like described for block 505 of Figure 5. Blocks 2307 through 2313, blocks 2315 through 2321, and 2331, 2333, 2329, 2335, 2337, and 2339 may be implemented in identical fashion to, respectively, blocks 507 through 513, 515 through 521, and 531, 533, 529, 535, 537, and 539 of Figure 5 described above and these Figure 23 blocks may be performed as provided herein. Blocks 2323 through 2327 may execute differently than blocks 523 through 527 of Figure 5. Here, in block 2323 the indicia of flow may be acoustic data determined by one or more acoustic sensors as described herein, such as the ultrasonic transducers. In some embodiments, the raw acoustic data may be entered into the record of block 2329 while in some other embodiments, some processing of the raw acoustic data may be performed on the processing module to determine flow data and this determined flow data may be entered into the record of block 2329. This may include determined flow rate, flow volume, or both, for example.

In block 2325, the orientation data and/or acoustic data may be monitored in order to determine the stoppage of flow and/or a change in orientation of the standpipe. For instance, the acoustic sensors may be able to determine changes in acoustic data that indicate when flow through the standpipe is stopped, such as a reduction of acoustic noise, and/or that the valve controlling flow into the standpipe has been closed. Additionally, the accelerometer may be able to determine when the orientation of the standpipe has been changed from vertical to another orientation, such as non-vertical like substantially horizontal (e.g., within 20% of horizontal). When this data indicates the stoppage of flow, then the flow data may be stored in the record of block 2329 and blocks 2335 through 2339 may be performed just like block 529 and 535 through 539 of Figure 5.

As illustrated in Figure 23, the process logic includes an optional step of determining pipe conditions. In block 2341, the processing module may determine one or more pipe conditions in any of the manners described herein after the processor has "woken up." In some embodiments, block 2341 may be performed before water is flowed through the standpipe. In some such embodiments, block 2303 may utilize the orientation data of the accelerometer to determine whether to wake up the processor. The pipe condition determinations may also be entered into the record of block 2329.

Additional descriptions of determining pipe conditions are provided in U.S. Provisional Patent Application No. 62/823,539, filed March 25, 2019, and are hereby incorporated by reference in its entirety.

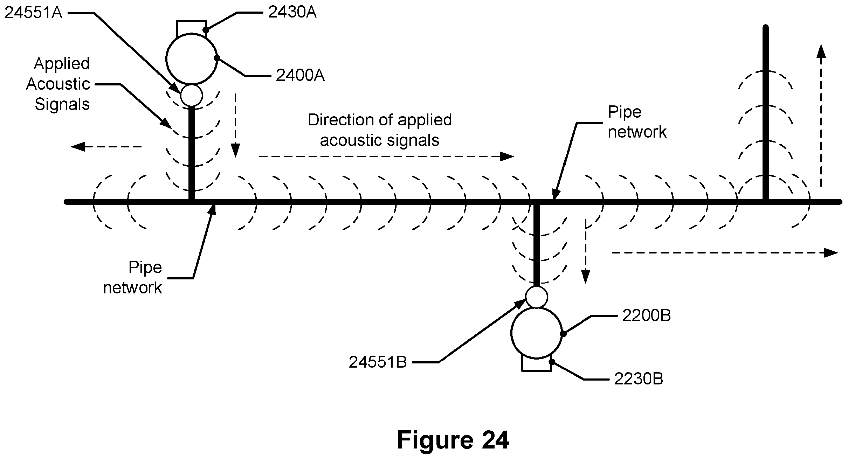

In some embodiments, multiple water release assemblies, each with a fluid flow processing module, may be used together in order to determine events along a single pipe or within a pipe system. Figure 24 depicts depict a top view of the example pipe network of Figures 23A and 23B with two taps and two water release assemblies. Here, two taps 24551A and 24551B are seen, water release assembly 2400A (which may be standpipe 2400A) includes a fluid flow processing module 2430A with acoustic sensors configured to detect pipe conditions like described above, is connected to tap 24551A and water release assembly 2400B (which may be standpipe 2400B) includes a fluid flow processing module 2430B with acoustic sensors configured to detect pipe conditions like described above, is connected to tap 24551B. By measuring the pipe conditions at these different locations of the pipe network, and in some implementations comparing them together, various information can be determined about the pipe and pipe systems, such as flow within the pipe, the presence and location of leaks within the pipe, and the usage of various aspects connected to the pipe.

Like depicted in Figure 24, the stimulus issuing device(s) of one water release assembly and the one or more stimulus response detecting sensors of another water release assembly may be placed at any of various locations in a pipe or pipe network. For example, the stimulus issuing device (e.g., a solenoid) of one water release assembly and at least one sensor of another water release assembly are widely separated, in which case the pipe assessment may be conducted for the region between the device and sensor, whether for identifying any particular isolated pipe condition or determining an average condition between the device and the sensor.

In the context of a tap or municipal water system, the system can assess a pipe condition between one tap and another tap. In such cases, the system is installed so that a ping can be issued at a first tap to which one water release is connected and the tap/pipe response can be detected at a second tap. In some cases, like described above with Figure 23, the water release assembly is attached to only a single tap, in which case both the ping and response detection is performed at a single tap. The resulting pipe or tap condition assessment may be focused on the tap and/or the local pipe attached to the tap.

When using two sensors or other devices, attached to two different taps, allows assessment of a greater range of pipe in a network, but any results may be adjusted to account for material changes, repairs etc. along the route of the pipe. Referring back to Figure 24, the fluid flow processing module 2430A on tap 24551A is seen generating one or more acoustic signals into the tap 24551A which travels within the pipe network, including to the second tap 24551B and water release assembly 2400B with the fluid flow processing module 2430B, as shown with the labelled acoustic signals (dashed semi-circles) and dashed arrows. Processing module 2230B is configured to receive and detect these acoustic signals, and also to interpret these signals, as described herein. Additionally, the fluid flow processing module 2430B may also be configured to generate the acoustic signals and the fluid flow processing module 2430A is configured to receive these acoustic signals.

Furthermore, pipe conditions detected by acoustic sensors at different locations may also be used to determine various events within the pipe network. For example, two acoustic pipe condition sensors positioned on the two taps 24551A and 24551B, may be used to determine flow, lack of flow, freezing, leaks, and usage of, for instance, the water in the pipe network.

Unless the context of this disclosure clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also generally include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list, and any combination of the items in the list. The term "implementation" refers to implementations of techniques and methods described herein, as well as to physical objects that embody the structures and/or incorporate the techniques and/or methods described herein. In certain embodiments, numerical or mathematical values, including end points of numerical ranges, are not to be interpreted with more significant digits than presented and may be understood to include some variation, such as within 5% of the referenced value or within 1% of the referenced value. For example, perpendicular may, in certain embodiments, mean within +/- 5% of 90 degrees.
For the avoidance of doubt, the application extends to the subject-matter set out in the following numbered paragraphs ("Para" or "Paras"):
1. A water release assembly comprising:
   a fluid flow passage with an inlet and an outlet;
   a flow meter for detecting fluid flow through the fluid flow passage;
   an attachment structure for attaching the fluid flow passage to an external fluid flow conduit; and
   a fluid flow processing module configured to:
      acquire and store location data, wherein the location data is related to a geographic location of the fluid flow processing module,
      store fluid flow data, wherein the fluid flow data is related to fluid flow through the fluid flow passage and is based, at least in part, on the fluid flow detected by the flow meter, and
      wirelessly transmit the location data and the fluid flow data to an external computer.
2. The water release assembly of Para 1, wherein:
   the flow meter includes a first flow sensor and a movement mechanism,
   the movement mechanism is configured to be moved by fluid flow through the fluid flow passage,
   the first flow sensor is configured to detect the movement of the movement mechanism and to generate first sensor data related to the movement of the movement mechanism, and
   the fluid flow data is based, at least in part, on the first sensor data.
3. The water release assembly of Para 2, wherein:
   the fluid flow processing module is further configured to store the first sensor data, and
   the fluid flow data includes the first sensor data.
4. The water release assembly of Para 2, wherein:
   the movement mechanism includes a magnet and is further configured such that fluid flow through the fluid flow passage causes the magnet to move, and
   the first flow sensor is further configured to detect the magnet and to generate first sensor data related to each detection of the magnet.
5. The water release assembly of Para 4, wherein the fluid flow data is indicative of each detection of the magnet by the first flow sensor.
6. The water release assembly of Para 4, wherein:
   the first sensor data is the generation of a voltage in response to each detection of the magnet,
   the fluid flow processing module is further configured to generate a count of each voltage generation by the first flow sensor, and
   the fluid flow data includes the count.
7. The water release assembly of Para 4, wherein:
   the flow meter further includes a chamber in which at least a portion of the movement mechanism and magnet are positioned, and
   the movement mechanism is configured such that fluid flow in the chamber causes the movement mechanism to move the magnet in a cyclic motion.
8. The water release assembly of Para 7, wherein each detection of the magnet is associated with one cycle of movement of the movement mechanism.
9. The water release assembly of Para 1, wherein:
   the flow meter comprises two acoustic sensors positioned in contact with the fluid flow passage,
   the two acoustic sensors are configured to generate sensor data affected by movement of fluid through the fluid flow passage, and
   the fluid flow data includes the sensor data.
10. The water release assembly of Para 9, wherein the two acoustic sensors are ultrasonic transducers.
11. The water release assembly of Para 9, wherein the two acoustic sensors are separated along the center axis of the fluid flow passage by a first distance of at least about 1.3 inches.
12. The water release assembly of Para 1, further comprising:
   one or more acoustic sensors configured to receive acoustic signals from a pipe, and
   a housing, wherein:
      the one or more acoustic sensors and the fluid flow processing module are positioned within the housing, and
      the fluid flow processing module is further configured to analyze the acoustic signals received by the one or more acoustic sensors to determine a pipe condition of the pipe.
13. The water release assembly of Para 12, further comprising an acoustic signal generator configured to generate an acoustic signal, wherein:
   the acoustic signal generator is positioned within the housing, and
   the fluid flow processing module is further configured to cause the acoustic signal generator to apply an acoustic signal to the fluid flow passage.
14. The water release assembly of Para 13, wherein the acoustic signal generator is one of a microphone or a solenoid.
15. The water release assembly of Para 12, wherein the pipe condition is one or more of: a crack in a pipe, bore loss, wall loss, and flow in the pipe.
16. The water release assembly of Para 12, further comprising an accelerometer, wherein:
   the accelerometer is positioned within the housing and is configured to generate orientation data with respect to the ground, and
   the fluid flow processing module is further configured to:
      exit a sleep state based one or more of the orientation data and acoustic data, and
      enter a sleep state based one or more of the orientation data and acoustic data.
17. The water release assembly of Para 16, wherein the fluid flow processing module is further configured to:
   exit a sleep state based one or more of: (i) the orientation data indicating a center axis of the water release assembly is oriented in a non-horizontal position relative to the ground, and (ii) acoustic data indicating one or more of: fluid is flowing within the fluid flow passage and a valve has been opened, and
   enter a sleep state based one or more of: (i) the orientation data indicating the center axis of the water release assembly is in a substantially horizontal position relative to the ground, and (ii) acoustic data indicating one or more of: fluid is not flowing within the fluid flow passage and a valve has been closed.
18. The water release assembly of Para 1, further comprising a flow meter housing, wherein:
   the flow meter and the fluid flow processing module are positioned within the flow meter housing,
   the flow meter includes one or more second sensors configured to generate second sensor data related to movement of fluid through the fluid flow passage,
   the fluid flow data includes the second sensor data, and
   the flow meter housing is connected to the fluid flow passage.
19. The water release assembly of Para 1, wherein the fluid flow passage, the flow meter, and the attachment structure are a standpipe.
20. The water release assembly of Para 1, wherein:
   the fluid flow processing module includes a global positioning satellite (GPS) antenna and a wireless antenna, and
   the fluid flow processing module is further configured to acquire the location data using the GPS antenna and to transmit the location data and the fluid flow data using the wireless antenna.
21. The water release assembly of Para 20, wherein the wireless antenna is one or more of: a cellular antenna, a Code Division Multiple Access (CDMA) antenna, a Global System for Mobile Communications (GSM) antenna, a low power wide area network (LoRaWAN) antenna, an antenna capable of operating between 850 MHz and 1,900 MHz, an antenna capable of operating between 2.4 GHz and 5 GHz, a Bluetooth antenna, an omnidirectional antenna, and a directional antenna.
22. A method comprising:
   attempting to acquire location data of a water release assembly using a first communications unit;
   acquiring and storing fluid flow data related to fluid flow through a fluid flow passage of the water release assembly;
   creating a new record that includes one or more of: fluid flow data, location data, time, date, battery voltage of a fluid flow sensor unit; and
   attempting to wirelessly connect with a wireless network using a second communications unit.
23. The method of Para 22, wherein:
   the first communications unit includes a GPS antenna and attempting to acquire location data further comprises using the GPS antenna, and
   the second communications unit includes a wireless antenna and attempting to wirelessly connect with the wireless network further comprises using the wireless antenna.
24. The method of Para 22, wherein:
   acquiring and storing fluid flow data further comprises detecting fluid flow through the fluid flow passage, and
   the method further comprises: powering on, after the detecting, the first communications unit and the second communications unit.
25. The method of Para 24, wherein the detecting fluid flow through the fluid flow passage further comprises detecting magnetic pulses of a movement mechanism of a flow meter.
26. The method of Para 25, further comprising:
   resetting and then starting a first timer in response to detecting each magnetic pulse; and
   storing, after determining that the first timer has reached a first threshold time, the new record.
27. The method of Para 24, wherein the detecting fluid flow through the fluid flow passage further comprises detecting acoustic signals from the fluid flow passage.
28. The method of Para 22, further comprising determining a pipe condition of one or more pipes to which the water release is directly or indirectly connected.
29. The method of Para 22, further comprising:
   acquiring and storing the location data of the fluid flow passage;
   after acquiring and storing the location data, powering off the first communications unit;
   acquiring a wireless connection with the wireless network; and
   after acquiring the wireless connection, wirelessly transmitting the location data and the new record to an external computer.
30. The method of Para 29, further comprising:
   powering off the second communications unit after wirelessly transmitting the new record to the external computer.
31. The method of Para 30, further comprising:
   powering on the second communications unit and contemporaneously starting a third timer; and
   powering off the first communications unit after determining that the second timer has reached a second threshold time.
32. The method of Para 22, further comprising:
   powering on the first communications unit and contemporaneously starting a second timer;
   powering off the first communications unit after acquiring the location data; and
   powering off the first communications unit after determining that the second timer has reached a second threshold time.
33. The method of Para 22, further comprising:
   causing the fluid flow processing module of the water release assembly to exit a sleep state based on receiving one or more of: orientation data from an accelerometer and acoustic data from acoustic sensors, and
   causing the fluid flow processing module to enter a sleep state based on receiving one or more of: the orientation data and the acoustic data.
34. The water release assembly of Para 33, wherein:
   the causing the fluid flow processing module to exit the sleep state is further based on receiving one or more of: (i) orientation data indicating a center axis of the water release assembly is oriented in a non-horizontal position relative to the ground, and (ii) acoustic data indicating one or more of: fluid is flowing within the fluid flow passage and a valve has been opened, and
   the causing the fluid flow processing module to enter the sleep state is further based on receiving one or more of: (i) orientation data indicating the center axis of the water release assembly is in a substantially horizontal position relative to the ground, and (ii) acoustic data indicating one or more of: fluid is not flowing within the fluid flow passage and a valve has been closed.

## Claims

1. A water release assembly (200) comprising:
a fluid flow passage (202) with an inlet (214) and an outlet (216), and configured to attach to an external fluid flow conduit;
a flow meter (206) for detecting fluid flow through the fluid flow passage (202) and having:
a movement mechanism (324) having a magnet (328), wherein the movement mechanism and the magnet are configured to be moved by fluid flow through the fluid flow passage (202), and
a first flow sensor (210) configured to detect the magnet (328) and to generate first sensor data related to each detection of the magnet (328); and
a fluid flow processing module (212) configured to:
exit a sleep state based on receiving first sensor data from the first flow sensor,
attempt to acquire and store location data related to a geographic location of the fluid flow processing module (212), and
store fluid flow data related to fluid flow through the fluid flow passage (202).

2. The water release assembly (200) of claim 1, wherein the processing module is further configured to attempt to wirelessly transmit the location data and the fluid flow data to an external device.

3. The water release assembly (200) of claim 1, wherein the fluid flow data is based, at least in part, on the first sensor data.

4. The water release assembly (200) of claim 1, wherein the processing module is further configured to enter a sleep state based on the first flow sensor data.

5. The water release assembly (200) of claim 1, wherein the fluid flow processing module is further configured to receive, while in the sleep state, the first sensor data from the first flow sensor.

6. The water release assembly (200) of claim 1, wherein the fluid flow processing module is further configured to create, based on the first sensor data, a new record that includes one or more of: fluid flow data, location data, time, date, and battery voltage of a fluid flow sensor unit (210) .

7. The water release assembly (200) of claim 1, wherein the fluid flow data is related to each detection of the magnet by the first flow sensor.

8. The water release assembly (200) of claim 1, wherein:
the fluid flow processing module includes a global positioning satellite (GPS) antenna, and
the fluid flow processing module is further configured to acquire the location data using the GPS antenna.

9. The water release assembly (200) of claim 1, wherein the flow meter (206) further includes a chamber (208) in which at least a portion of the movement mechanism (324) and the magnet (328) are positioned.

10. The water release assembly (200) of claim 1, wherein the fluid flow passage is a standpipe.

11. A method comprising:
causing a fluid flow processing module (212) of a water release assembly (200) to exit a sleep state based on receiving first sensor data from a first flow sensor (210) of a flow meter, wherein the flow meter includes a movement mechanism with a magnet (328), is configured to be moved by fluid flow through a fluid flow passage (202), and is configured such that fluid flow through the fluid flow passage (202) causes the magnet (328) to move, and wherein the first flow sensor (210) is further configured to detect the magnet (328) and to generate first sensor data related to each detection of the magnet (328);
attempting to acquire and store location data related to a geographic location of the fluid flow processing module (212) using a first communications unit (446); and
storing fluid flow data related to fluid flow through the fluid flow passage (202).

12. The method of claim 11, wherein the fluid flow data is based, at least in part, on the first sensor data.

13. The method of claim 11, further comprising causing the fluid flow processing module to enter the sleep state based on the first flow sensor data.

14. The method of claim 11, wherein the receiving further comprises receiving, by the fluid flow processing module in the sleep state, the first sensor data from the first flow sensor.

15. The method of claim 11, further comprising attempting to wirelessly transmit the location data and the fluid flow data to an external device using a second communications unit (446), and optionally further comprising creating a new record that includes one or more of: fluid flow data, location data, time, date, and battery voltage of a fluid flow sensor unit (210).
